# EUROPEAN PATENT APPLICATION

(11) **EP 4 749 438 A1**
(43) Date of publication of application: **27.05.2026**
(21) Application number: 25211817.9
(22) Date of filing: 28.10.2025
(51) Int. Cl.: G06F 9/4401, G06F 3/12

(54) **INFORMATION PROCESSING APPARATUS, CONTROL METHOD, AND PROGRAM**

(30) Priority: 21.11.2024 JP 2024203064
(71) Applicant: Canon Kabushiki Kaisha, Tokyo, 146-8501 (JP)
(72) Inventor: KAWAI, Yu, Tokyo, 146-8501 (JP)
(74) Representative: Canon Europe Limited

(57) **Abstract**

An issue is solved by providing a program for causing execution of a first display control to display a notification screen to prevent a predetermined application program from being transitioned to the background during a predetermined period.

## Description

### Technical Field

The present disclosure relates to an information processing apparatus, a control method, and a program.

### BACKGROUND

There is a known form of connection in which an information processing apparatus, such as a smartphone, transmits information for establishing a connection with an access point to a communication apparatus, such as a printer, and the communication apparatus establishes a connection with the access point using the information. Japanese Patent Laid-Open No. 2016-127545 describes an information processing apparatus configured to transmit information to a communication apparatus to set a connection mode on the communication apparatus that determines a form of connection between the information processing apparatus and the communication apparatus.

Meanwhile, as it has become popular to transmit information for establishing a connection with an access point to a communication apparatus, there is a demand for improved usability of an application program that performs a process for transmitting information for establishing a connection with an access point to a communication apparatus.

### SUMMARY

The present disclosure is directed to improving the usability of an application program that performs a process for transmitting information for establishing a connection with an access point to a communication apparatus.

According to a first aspect of the present invention, there is provided a predetermined application program as specified in claim 1. Optional features are specified in claims 2 to 13. According to a second aspect of the present invention, there is provided a control method of an information processing apparatus as specified in claim 14. According to a third aspect of the present invention, there is provided an information processing apparatus as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a communication system.
Fig. 2 illustrates an example of a configuration diagram illustrating a terminal device and a communication apparatus.
Figs. 3A and 3B are a flowchart illustrating an example of a first connection setting process.
Fig. 4 illustrates an example of a screen for direct connection.
Fig. 5 illustrates an example of a password input screen.
Fig. 6 illustrates an example of a screen for checking a password.
Fig. 7 is a flowchart illustrating an example of a process performed by the terminal device using a predetermined application.
Fig. 8 illustrates an example of a confirmation screen.
Fig. 9 is a flowchart illustrating an example of a process in which the terminal device determines a method for a connection setting process using the predetermined application.
Fig. 10 is a flowchart illustrating an example of a process related to AccessorySetupKit in a second connection setting process.
Figs. 11A and 11B are a flowchart illustrating an example of the second connection setting process.
Fig. 12 illustrates an example of a screen for checking a password.
Fig. 13 illustrates an example of a password input screen.
Fig. 14 is a flowchart illustrating an example of a process related to AccessorySetupKit in the second connection setting process.
Fig. 15 is a flowchart illustrating an example of the second connection setting process.
Fig. 16 illustrates an example of a screen that displays a guide for switching a connection destination for the terminal device.
Fig. 17 illustrates an example of a screen for checking a password and inputting a password.
Fig. 18 illustrates an example of a notification screen for preventing the predetermined application from being transitioned to the background.

### DESCRIPTION OF THE EMBODIMENTS

### First Embodiment

An information processing apparatus and a communication apparatus included in a communication system according to a first embodiment will be described. The information processing apparatus is also referred to as a terminal device. A smartphone is used as an example of an information processing apparatus according to the present embodiment, but this is not intended to be a limitation. Various other information processing apparatuses such as a personal computer (PC), a tablet terminal, a personal digital assistant (PDA), or a digital camera are also applicable. Further, a printer is used as an example of a communication apparatus according to the present embodiment. The printer may be an inkjet printer configured to print using ink or a laser beam printer configured to print using toner. Further, the printer may be a full-color printer capable of performing color printing or a monochrome printer incapable of performing color printing but capable of performing monochrome printing. It should be noted that the communication apparatus according to the present embodiment is not limited to a printer and may be any communication apparatus capable of performing wireless communication with an information processing apparatus. Examples of other applicable communication apparatuses include a copying machine, a facsimile apparatus, a scanner, a smartphone, a PC, a tablet terminal, a PDA, a digital camera, a music reproduction device, a television, a smart speaker, a robot vacuum cleaner, an automatic cooking pot, and a refrigerator. Furthermore, a multi-function peripheral including a plurality of functions, such as copy, fax, and print functions, is also applicable.

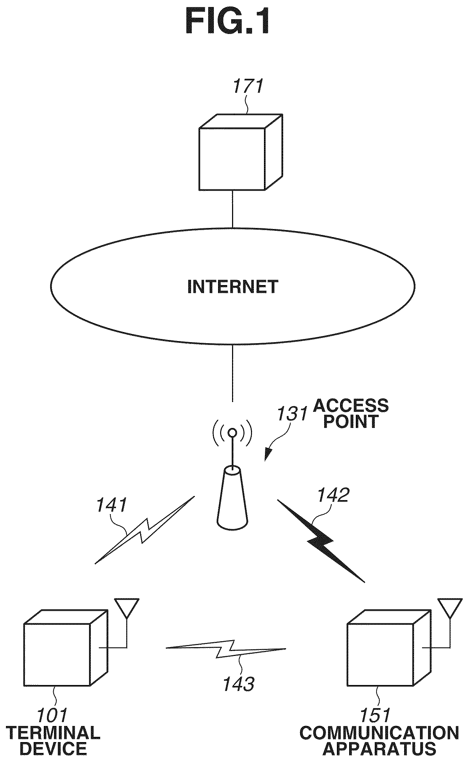

First, a system configuration for realizing the present embodiment will be described. Fig. 1 is a diagram illustrating an example of a configuration of a communication system according to the present embodiment. This system includes a communication apparatus 151, a terminal device 101, an access point (AP) 131, and an external server 171.

The terminal device 101 is an information processing apparatus according to the present embodiment. The communication apparatus 151 is a communication apparatus according to the present embodiment. The AP 131 is an access point activated by an external apparatus that is external to both the terminal device 101 and the communication apparatus 151. The external apparatus is, for example, a wireless local area network (wireless LAN) router. The external server 171 is a server capable of providing a service to an apparatus connected to the AP 131 via the internet.

In a situation where the communication apparatus 151 and the terminal device 101 are connected to the AP 131, a local area network (LAN) formed by the AP 131 includes the AP 131, the communication apparatus 151, and the terminal device 101. Further, a wide area network (WAN) includes the AP 131 and the external server 171.

According to the present embodiment, the terminal device 101 can communicate with the communication apparatus 151 via the AP 131 in a case where an infrastructure connection, which will be described below, is established. Furthermore, the terminal device 101 can directly communicate with the communication apparatus 151 without using the AP 131 in a case where a direct connection, which will be described below, is established. It should be noted that hereinafter, a connection with an AP corresponds to a connection with a network formed by the AP. It should be noted that a single external apparatus may be configured to activate a plurality of APs and form a plurality of networks simultaneously.

According to the present embodiment, a connection 141 between the terminal device 101 and the AP 131 and a connection 142 between the communication apparatus 151 and the AP 131 are connections established using a communication method based on the Institute of Electrical and Electronics Engineers (IEEE) 802.11 series of standards. The communication method based on the IEEE 802.11 series of standards refers to, specifically, Wi-Fi^{®} (Wireless Fidelity). Further, a connection 143 between the terminal device 101 and the communication apparatus 151 is also a connection established using a communication method based on the IEEE 802.11 series of standards. However, the communication method used to establish the connection 143 is not limited to the method described above, and another method such as Bluetooth^{®} Low Energy, Bluetooth^{®} Classic, Wi-Fi Aware, Near Field Communication (NFC), or the like may also be used. The AP 131 and the external server 171 can communicate with each other via the internet, and in a state where the AP 131 is connected to the internet, apparatuses that are connected to the AP 131 (such as the terminal device 101 and the communication apparatus 151) can also use the internet. It should be noted that the connection 141 between the terminal device 101 and the AP 131 and the connection 142 between the communication apparatus 151 and the AP 131 may be connections established via a wired LAN.

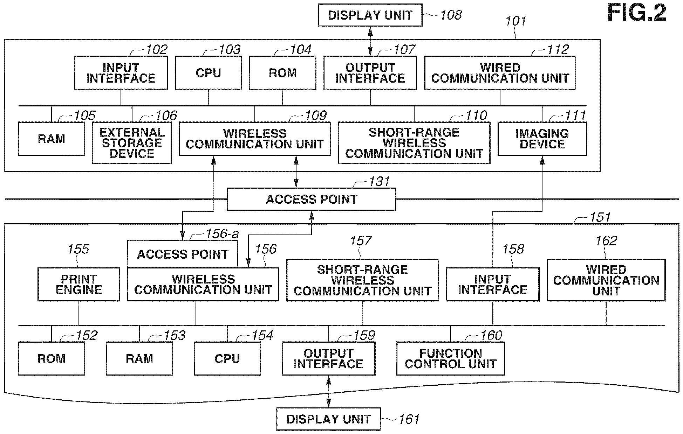

Next, configurations of an information processing apparatus according to the present embodiment and a communication apparatus capable of communicating with the information processing apparatus according to the present embodiment will be described with reference to a block diagram illustrated in Fig. 2. Further, although the configurations described below are used as examples in the present embodiment, the present embodiment is applicable to any apparatus capable of communicating with a communication apparatus, and the functions are not limited to those illustrated in Fig. 2.

The terminal device 101 includes an input interface 102, a central processing unit (CPU) 103, a read-only memory (ROM) 104, a random access memory (RAM) 105, an external storage device 106, an output interface 107, a display unit 108, a wireless communication unit 109, a short-range wireless communication unit 110, an imaging device 111, a wired communication unit 112, and the like. The CPU 103, the ROM 104, the RAM 105, and the like form a computer of the terminal device 101.

The input interface 102 is an interface configured to receive data input and an operation instruction from a user and includes a physical keyboard, a button, a touch panel, and the like. It should be noted that the output interface 107, which will be described below, and the input interface 102 may share the same configuration to output to a screen and receive a user operation using the same configuration.

The CPU 103 is a system control unit and controls the entire terminal device 101. According to the present embodiment, the CPU 103 controls the content displayed on the display unit 108 (performs display control) and the like.

The ROM 104 stores fixed data for a control program executed by the CPU 103, a data table, an operating system (hereinafter, referred to as "OS") program, and the like. According to the present embodiment, each control program stored in the ROM 104 performs software execution control, such as scheduling, task switching, and interruption processing, under the management of an embedded OS stored in the ROM 104. According to the present embodiment, the ROM 104 stores a predetermined application program (application) for controlling the communication apparatus 151. The application program is, in other words, application software. The predetermined application is installed into the terminal device 101 externally using, for example, a store application for installing various applications. Further, the predetermined application is an application provided by the vendor of the communication apparatus 151. According to the present embodiment, the predetermined application is an application for communicating with the communication apparatus 151 and configuring a connection setting for the communication apparatus 151. Hereinafter, the predetermined application will be referred to as the predetermined application. It should be noted that the predetermined application may also include a function other than the function that configures the connection setting for the communication apparatus 151. Specific examples of other functions include a function (print job transmission function) that transmits a print job to cause the communication apparatus 151 to perform printing and a function (scan job transmission function) that transmits a scan job to cause the communication apparatus 151 to perform scanning. It should be noted that each process described as a process performed by the OS in the present embodiment is precisely a process performed by the CPU 103 in accordance with a program in the OS. Similarly, each process described as a process performed by the application is precisely a process performed by the CPU 103 in accordance with a program in the application.

The RAM 105 is configured using a static RAM (SRAM), which requires a backup power supply, or the like. It should be noted that the RAM 105 retains data using a primary battery for data backup, which is not illustrated, so that important data, such as a program control variable, can be stored without being lost. Further, the RAM 105 also includes a memory area for storing setting information about the terminal device 101, management data of the terminal device 101, and the like. Further, the RAM 105 is also used as a main memory and a work memory of the CPU 103.

The external storage device 106 includes various programs such as a printing information generation program configured to generate printing information that can be interpreted by the communication apparatus 151 and an information transmission and reception control program that controls information transmitted to and received from the communication apparatus 151 connected via the wireless communication unit 109. Further, the external storage device 106 also stores various types of information used by these programs and image data obtained from another information processing apparatus or the internet.

The output interface 107 is an interface configured to control the display unit 108 to display data and provide a notification of a state of the terminal device 101.

The display unit 108 includes a light emitting diode (LED), a liquid crystal display (LCD), and the like and is configured to display data and provide a notification of a state of the terminal device 101. It should be noted that a software keyboard including a numeral input key, a mode setting key, a determination key, a cancel key, a power key, and the like may be presented on the display unit 108 to receive input from the user via the display unit 108. According to the present embodiment, the display unit 108 is a touch panel and configured to receive a user operation performed with a manipulator such as a finger or a pen.

The wireless communication unit 109 is configured to establish a wireless connection with an apparatus, such as the communication apparatus 151 or the AP 131, and performing data communication. For example, the wireless communication unit 109 may communicate with the communication apparatus 151 directly via wireless communication or via the AP 131, which is external to the terminal device 101 and the communication apparatus 151. According to the present embodiment, Wi-Fi, which is a communication method based on the IEEE 802.11 standards, is used as the wireless communication method of the wireless communication unit 109, but Bluetooth^{®} Classic or the like may also be used. Further, according to the present embodiment, the wireless LAN is a network via Wi-Fi. It should be noted that according to the present embodiment, a connection using a method in which the terminal device 101 and the communication apparatus 151 directly connect to each other without using an external AP is referred to as a direct connection. Further, a connection using a method in which the terminal device 101 and the communication apparatus 151 connect to each other via an external AP is referred to as the infrastructure connection.

The short-range wireless communication unit 110 is a configuration for performing data communication with an apparatus, such as the communication apparatus 151, using a short-range wireless communication method and performs communication using a communication method different from the communication method used by the wireless communication unit 109. The short-range wireless communication unit 110 can connect to a short-range wireless communication unit 157 included in the communication apparatus 151. It should be noted that examples of the communication method of the short-range wireless communication unit 110 include Bluetooth^{®} Low Energy, Bluetooth^{®} Classic, Wi-Fi Aware, NFC, and the like.

The imaging device 111 is a device configured to convert an image captured by an imaging element into digital data.

The digital data is stored in the RAM 105. Thereafter, the digital data is converted into a predetermined image format by a program executed by the CPU 103, and the converted data is stored as image data in the external storage device 106.

The wired communication unit 112 is a configuration for establishing a wired connection with an apparatus, such as the communication apparatus 151 or the AP 131, and performing data communication. For example, the wired communication unit 112 performs communication via a wired LAN. According to the present embodiment, the wired LAN performs communication using an Ethernet standard. It should be noted that this method is not intended to be limiting and the wired communication unit 112 may perform communication via, for example, a universal serial bus (USB) cable. Further, in a case where the terminal device 101 is, for example, a smartphone, the terminal device 101 does not have to include the wired communication unit 112.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display unit 161, a wired communication unit 162, and the like.

The ROM 152, the RAM 153, the CPU 154, and the like form a computer of the communication apparatus 151.

The wireless communication unit 156 is configured to establish a wireless connection with an apparatus, such as the terminal device 101 or the AP 131, and performing data communication. According to the present embodiment, Wi-Fi, which is a communication method based on the IEEE 802.11 standards, is used as the wireless communication method of the wireless communication unit 156, but Bluetooth^{®} Classic or the like may also be used. It should be noted that the wireless communication unit 156 includes an AP 156-a as an internal AP of the communication apparatus 151 to connect to an apparatus, such as the terminal device 101. It should be noted that this AP can connect to the wireless communication unit 109 of the terminal device 101. It should be noted that the wireless communication unit 156 may directly communicate with the terminal device 101 via the AP 156-a or may communicate with the terminal device 101 via the AP 131. Further, the AP 156-a may be hardware configured to function as an AP, or the wireless communication unit 156 may operate as the AP 156-a using software for functioning as an AP. Further, the communication apparatus 151 may be configured to activate a plurality of APs having different service set identifiers (SSIDs) and/or passwords in the communication apparatus 151.

The RAM 153 is configured using a dynamic RAM (DRAM), which requires a backup power supply, or the like. It should be noted that the RAM 153 retains data by receiving power from a power source for data backup, which is not illustrated, so that important data, such as a program control variable, can be stored without being lost. Further, the RAM 153 is also used as a main memory and a work memory of the CPU 154 and stores a reception buffer configured to temporarily store printing information received from the terminal device 101 or the like and various types of information.

The ROM 152 stores fixed data for a control program executed by the CPU 154, a data table, an OS program, and the like. According to the present embodiment, each control program stored in the ROM 152 performs software execution control, such as scheduling, task switching, and interruption processing, under the management of an embedded OS stored in the ROM 152. Further, the ROM 152 also includes a memory area for storing data that needs to be retained even when no power is supplied, such as setting information about the communication apparatus 151 and management data of the communication apparatus 151.

The CPU 154 is a system control unit and controls the entire communication apparatus 151.

The print engine 155 forms an image on a print medium, such as paper, using a printing agent, such as ink, in accordance with information stored in the RAM 153 and a print job received from the terminal device 101 or the like and outputs the print result. The print job sent from the terminal device 101 or the like has a large amount of transmission data and requires high-speed communication, and is therefore received via the wireless communication unit 156, which is capable of communication at higher speed than the short-range wireless communication unit 157.

The short-range wireless communication unit 157 is a configuration for communicating with a device, such as the terminal device 101, using a short-range wireless communication method. It should be noted that examples of the communication method of the short-range wireless communication unit 157 include Bluetooth^{®} Low Energy, Bluetooth^{®} Classic, Wi-Fi Aware, and the like.

The input interface 158 is an interface configured to receive data input and an operation instruction from the user and includes a physical keyboard, a button, a touch panel, and the like. It should be noted that the output interface 159, which will be described below, and the input interface 158 may share the same configuration to output to a screen and receive a user operation using the same configuration. The output interface 159 is an interface configured to control the display unit 161 to display data and provide a notification of a state of the communication apparatus 151.

The function control unit 160 performs function operation management to determine whether to operate functions of the communication apparatus 151 simultaneously.

The display unit 161 includes an LED, an LCD, and the like and is configured to display data and provide a notification of a state of the communication apparatus 151. It should be noted that a software keyboard including a numeral input key, a mode setting key, a determination key, a cancel key, a power key, and the like may be presented on the display unit 161 to receive input from the user via the display unit 161.

The wired communication unit 162 is a configuration for establishing a wired connection with an apparatus, such as the terminal device 101 or the AP 131, and performing data communication. For example, the wired communication unit 162 performs communication via a wired LAN. It should be noted that this method is not intended to be limiting and the wired communication unit 162 may perform communication via, for example, a USB cable.

### Direct Connection Method

A direct connection refers to a mode where devices wirelessly establish a direct (i.e., peer-to-peer) connection with each other without using an external apparatus, such as the AP 131. The direct connection is also referred to as a peer-to-peer connection (P2P connection). The communication apparatus 151 can operate in a mode (direct connection mode) that uses a direct connection for communication, as one of the connection modes. In Wi-Fi communication, there is a plurality of modes that uses a direct connection for communication, such as a software AP mode and a Wi-Fi Direct mode.

A mode that uses Wi-Fi Direct to establish a direct connection is referred to as a Wi-Fi Direct mode. Wi-Fi Direct is a standard that is developed by the Wi-Fi Alliance and included in the IEEE 802.11 series of communication standards. In the Wi-Fi Direct mode, after a device search command is issued to search for a device to be a communication partner, P2P group owner (GO) and P2P client roles are determined, and subsequently the rest of the wireless connection process is performed. The group owner corresponds to a Wi-Fi parent station (parent station), and the client corresponds to a Wi-Fi child station (child station). This role determination corresponds to, for example, a P2P GO Negotiation. It should be noted that the communication apparatus 151 is neither a parent station nor a child station in the Wi-Fi Direct mode before role determination is performed. Specifically, first, one of the devices that perform communication issues a device search command to search for a device to connect to in the Wi-Fi Direct mode. In a case where the other device to communicate with is discovered, the devices verify information about a service and a function each device can provide. It should be noted that this verification of device provision information is optional, not required. This device provision information verification phase corresponds to, for example, P2P Provision Discovery. Next, by verifying the device provision information, the devices determine which one will serve as the P2P client and which one will serve as the P2P group owner. Next, after the client and the group owner are determined, the devices exchange parameters for performing communication via Wi-Fi Direct. The P2P client and the group owner perform the rest of the wireless connection process and an Internet Protocol (IP) connection process based on the exchanged parameters. It should be noted that the communication apparatus 151 may always operate as the GO without performing the above-described GO Negotiation in the Wi-Fi Direct mode. In other words, the communication apparatus 151 may operate in the Wi-Fi Direct mode that is an Autonomous GO mode. Further, a state where the communication apparatus 151 operates in the Wi-Fi Direct mode refers to, for example, a state where no Wi-Fi Direct connection is established but the communication apparatus 151 operates as the GO or a state where a Wi-Fi Direct connection is established and the communication apparatus 151 operates as the GO.

In the software AP mode, one (e.g., the terminal device 101) of the devices that perform communication (e.g., the terminal device 101 and the communication apparatus 151) serves as the client, which plays the role of requesting various services. Then, the other device realizes a Wi-Fi AP function through a software setting. The software AP corresponds to a Wi-Fi parent station, and the client corresponds to a Wi-Fi child station. In the software AP mode, the client issues a device search command to search for a device to operate as the software AP. In a case where the software AP is discovered, the client and the software AP perform the rest of the wireless connection process (such as wireless connection establishment) and subsequently the IP connection process (such as IP address assignment). It should be noted that a command and a parameter that are defined in the Wi-Fi standard may be used as a command and a parameter that are transmitted and received to establish a wireless connection between the client and the software AP, and descriptions are omitted herein.

According to the present embodiment, in a case where a direction connection is established and maintained by the communication apparatus 151, the communication apparatus 151 operates as a parent station within the network to which the communication apparatus 151 belongs. It should be noted that the parent station refers to an apparatus that establishes a wireless network and provides a child station with a parameter used to connect to the wireless network. The parameter used to connect to the wireless network refers to, for example, a parameter that relates to a channel used by the parent station. By receiving the parameter, the child station connects to the wireless network established by the parent station using the channel used by the parent station. In the direct connection mode, since the communication apparatus 151 operates as the parent station, the communication apparatus 151 can determine which frequency band to use and which channel to use for communication in the direct connection mode. According to the present embodiment, the communication apparatus 151 can use a channel corresponding to a 2.4 GHz frequency band and a channel corresponding to a 5 GHz frequency band for communication in the direct connection mode.

### Infrastructure Connection Method

The infrastructure connection is a form of connection in which a connection to an AP (e.g., the AP 131) that manages a network of devices intended to communicate with each other (e.g., the terminal device 101 and the communication apparatus 151) is established and the devices communicate with each other via the AP. The communication apparatus 151 can also operate in a mode (infrastructure connection mode) that uses an infrastructure connection for communication, as one of the connection modes.

In the infrastructure connection, each device issues a device search command to search for an AP. In a case where an AP is discovered, the device and the AP perform the rest of the wireless connection process (such as wireless connection establishment) and subsequently the IP connection process (such as IP address assignment). It should be noted that a command and a parameter that are defined in the Wi-Fi standard may be used as a command and a parameter that are transmitted and received to establish a wireless connection between the device and the AP, and descriptions are omitted herein.

According to the present embodiment, when the communication apparatus 151 operates in the infrastructure connection, the AP 131 and the communication apparatus 151 operate as the parent station and the child station, respectively. In other words, according to the present embodiment, the infrastructure connection refers to a connection between the communication apparatus 151 operating as the child station and the apparatus operating as the parent station. In a case where an infrastructure connection is established by the communication apparatus 151 and an infrastructure connection to the AP 131 is established by the terminal device 101, the communication apparatus 151 and the terminal device 101 can communicate with each other via the AP 131. A channel to be used for communication via the infrastructure connection is determined by the AP 131, and the communication apparatus 151 performs communication via the infrastructure connection using the channel determined by the AP 131. According to the present embodiment, the communication apparatus 151 supports a channel corresponding to a 2.4 GHz frequency band and a channel corresponding to a 5 GHz frequency band for communication via the infrastructure connection. It should be noted that the communication apparatus 151 can also use a channel corresponding to the Dynamic Frequency Selection (DFS) band of the 5 GHz frequency band for communication via the infrastructure connection. It should be noted that in order to communicate with the communication apparatus 151 via the AP 131, the terminal device 101 recognizes and determines that the communication apparatus 151 belongs to a network that is formed by the AP 131 and to which the terminal device 101 belongs.

### Connection Setting Process

According to the present embodiment, the terminal device 101 configures a connection setting (network setting), which is a setting for configuring the communication apparatus 151 to operate with at least one of the communication methods, namely the infrastructure connection and the direct connection, using wireless communication with the communication apparatus 151. The connection setting process according to the present embodiment is also referred to as a cableless setup (CLS) because the connection setting process is performed via wireless communication. It should be noted that the connection setting process may be performed via wired communication. The terminal device 101 performs the connection setting process on the communication apparatus 151 in a case where a predetermined application stored in the external storage device 106 or the like is activated. The communication apparatus 151 can operate in a connection setting mode (connection setting state), which is a mode for performing the connection setting process, and performs the connection setting process in a state where the communication apparatus 151 operates in the connection setting mode described below. Details of the connection setting mode will be described below.

In the case of configuring the communication apparatus 151 to operate in the infrastructure connection mode, the terminal device 101 wirelessly transmits infrastructure setting information that is setting information for configuring the communication apparatus 151 to operate in the infrastructure connection mode to the communication apparatus 151. The infrastructure setting information includes information about the AP 131. The information about the AP 131 refers to, for example, information about a service set identifier (SSID), a password, a frequency band, and the like.

On the other hand, in the case of configuring the communication apparatus 151 to operate in the direct connection mode, the terminal device 101 wirelessly transmits direct setting information that is setting information for configuring the communication apparatus 151 to operate in the direct connection mode to the communication apparatus 151. The direct setting information includes an instruction to enable the Wi-Fi Direct function and configure the communication apparatus 151 to operate as the Group Owner and an instruction to enable an access point setting of the communication apparatus 151. Further, the terminal device 101 acquires, from the communication apparatus 151, connection information necessary for establishing a direct connection with the communication apparatus 151. The connection information necessary for establishing a direct connection with the communication apparatus 151 includes, for example, information about an SSID, a password, and the like of the communication apparatus 151 configured to operate in the direct connection mode.

According to the present embodiment, a direct connection for connection setting between the terminal device 101 and the communication apparatus 151 is used to transmit the infrastructure setting information or the direct setting information and acquire the necessary information for establishing a direct connection with the communication apparatus 151 during the connection setting process. Further, although the connection setting process using Wi-Fi is performed as the direct connection for connection setting in the present embodiment, a wireless communication standard other than Wi-Fi, such as Bluetooth, may be used. Further, a wired communication standard, such as a wired LAN or a USB, may be used as the direct connection for connection setting.

After an infrastructure connection or a direct connection using Wi-Fi is established between the terminal device 101 and the communication apparatus 151 by the connection setting process, the terminal device 101 and the communication apparatus 151 can communicate with each other via the established connection. Specifically, the terminal device 101 can transmit, for example, a print job that instructs the communication apparatus 151 to perform printing, a scan job that instructs the communication apparatus 151 to perform scanning, or the like to the communication apparatus 151 via the established connection. It should be noted that although the communication apparatus 151 can be configured to operate in the infrastructure connection mode or the communication apparatus 151 by the connection setting process according to the present embodiment, this configuration is not intended to be limiting. For example, the communication apparatus 151 may only be configured to operate in the infrastructure connection mode by the connection setting process (i.e., the communication apparatus 151 cannot be configured to operate in the direct connection mode).

It should be noted that, for example, the Simple Network Management Protocol (SNMP) may be used for communication between the terminal device 101 and the communication apparatus 151 during the connection setting process performed by the predetermined application.

### Connection Setting Mode

The communication apparatus 151 can operate in the connection setting mode. Examples of a trigger that causes the communication apparatus 151 to start operating in the connection setting mode include pressing a connection setting mode button by the user and activating (powering on) the communication apparatus 151 for the first time after arrival. The connection setting mode button may be a hardware button of the communication apparatus 151 or a software button displayed on the display unit 161 by the communication apparatus 151.

When the communication apparatus 151 starts operating in the connection setting mode, the communication apparatus 151 enables Wi-Fi communication. Specifically, the communication apparatus 151 enables an internal, dedicated AP (connection setting AP) of the communication apparatus 151 for the connection setting mode as a Wi-Fi communication enabling process. Consequently, the communication apparatus 151 is transitioned to a state where the communication apparatus 151 can establish a Wi-Fi direct connection with the terminal device 101. Connection information (such as an SSID and a password) necessary for connecting to the connection setting AP is stored in advance in the predetermined application installed in the terminal device 101. In other words, the terminal device 101 already recognizes the connection information necessary for connecting to the connection setting AP. Thus, unlike the connection information about the AP enabled in the direct connection mode, the connection information necessary for connecting to the connection setting AP cannot be changed freely by the user. It should be noted that no encryption method may be configured on the connection setting AP and no password may be required to connect to the AP. It should be noted that in the connection setting mode, the communication apparatus 151 may connect to the terminal device 101 using Wi-Fi Direct instead of standard Wi-Fi. In other words, the communication apparatus 151 may operate as the Group Owner and receive a setting command from the terminal device 101 via Wi-Fi Direct communication. It should be noted that in the connection setting mode, the communication apparatus 151 may enable communication other than Wi-Fi communication, such as Bluetooth^{®} Low Energy communication. In other words, the communication apparatus 151 may perform the connection setting process using a communication method other than Wi-Fi.

### Registration of the Communication Apparatus in the Application

According to the present embodiment, the predetermined application can register the communication apparatus 151 in the predetermined application by acquiring information about the communication apparatus 151 from the communication apparatus 151.

The information about the communication apparatus 151 refers to, for example, capability information about the communication apparatus 151, identification information (such as a Media Access Control (MAC) address) about the communication apparatus 151, device model information about the communication apparatus 151, and the like. The capability information about the communication apparatus 151 includes, specifically, a list containing information about functions supported by the communication apparatus 151, information about consumables (ink, paper) that can be used by the communication apparatus 151, information indicating a printing method of the communication apparatus 151, and the like. Then, the predetermined application selects one apparatus to serve as the communication partner for the predetermined application from one or more communication apparatuses 151 registered in the predetermined application. Hereinafter, the communication apparatus 151 that is currently selected as the apparatus to serve as the communication partner for the predetermined application will be referred to as the selected communication apparatus 151. It should be noted that the apparatus to serve as the communication partner for the predetermined application may be selected by receiving an apparatus selected from the one or more communication apparatuses 151 registered in the predetermined application from the user, or may be selected automatically by the predetermined application based on a predetermined criterion. Further, the apparatus to serve as the communication partner for the predetermined application may be changed, for example, by receiving an apparatus selected from the one or more communication apparatuses 151 registered in the predetermined application from the user. According to the present embodiment, the predetermined application transmits various jobs, such as a print job and a scan job, to the selected communication apparatus 151. In other words, the selected communication apparatus 151 is the transmission destination apparatus for various jobs.

### AccessorySetupKit

AccessorySetupKit is a function that can be executed on a terminal equipped with iOS^{®} version 18 or later or iPadOS^{®} version 18 or later and facilitates setup for communication with an accessory using Bluetooth^{®} or Wi-Fi. It should be noted that according to the present embodiment, the accessory refers to a communication apparatus that is located near the terminal device 101 and with which communication can be established using Bluetooth^{®} or Wi-Fi. Further, the setup for communication with an accessory refers to the acquisition of accessory information corresponding to the accessory by the OS. The accessory information includes the full SSID corresponding to the accessory.

A process performed by each program during AccessorySetupKit execution will be described.

According to the present embodiment, the predetermined application displays a predetermined button for executing a process related to the communication apparatus 151. In a case where the predetermined button is pressed, the predetermined application instructs the OS to execute AccessorySetupKit.

At this time, specifically, the predetermined application issues the instruction by notifying the OS of a character string indicating at least a portion of the SSID of the accessory to be searched and image data corresponding to the accessory to be searched.

Then, in a case where the OS is instructed to execute AccessorySetupKit by the predetermined application, the OS performs a search for an accessory corresponding to the SSID including the character string received from the predetermined application.

Subsequently, the OS terminates the search for the accessory and displays a screen presenting the search result. The screen presenting the search result includes the full SSID of the accessory discovered by the search and image data corresponding to the accessory. It should be noted that the image data corresponding to the accessory refers to the image data received from the predetermined application. It should be noted that in a case where a plurality of accessories corresponding to the SSID is discovered, the screen is displayed so that the user can select one of the plurality of accessories. Specifically, for example, in a case where the OS receives a sliding operation from the user in a state where a region for selecting a first accessory discovered by the search is displayed on the screen, the OS controls the screen to additionally display a region for selecting a second accessory discovered by the search.

Then, after a button for determining one of the apparatuses discovered by the OS as a pairing target apparatus is operated, the OS transmits accessory information corresponding to the accessory determined as the pairing target apparatus to the predetermined application. It should be noted that pairing refers to enabling a connection with the terminal device 101.

Subsequently, the OS displays a screen indicating that the accessory is ready for use. The accessory being ready for use indicates that pairing with the accessory is complete. It should be noted that the accessory that has completed pairing is managed as a paired accessory. The screen includes a "continue in the application" button. In a case where the "continue in the application" button is pressed, the OS notifies the predetermined application that AccessorySetupKit will terminate, and terminates the operation of AccessorySetupKit. Issues Solved by the Present Embodiment

As described above, according to the present embodiment, it is necessary to establish a connection between the communication apparatus 151 and the terminal device 101 for the connection setting process. In order to establish the connection establishment, the predetermined application calls a predetermined application programming interface (API) for issuing a connection establishment instruction, thereby instructing the OS to establish a connection between the communication apparatus 151 operating in the connection setting mode and the terminal device 101. Then, the OS performs a communication apparatus search and establishes a connection between a discovered communication apparatus and the terminal device 101. However, in the conventional configuration in which an instruction to establish a connection is issued to the OS using the predetermined API, when a plurality of communication apparatuses is discovered by the OS based on the instruction, the terminal device 101 connects to a communication apparatus emitting a beacon with the highest signal strength or a communication apparatus first discovered by the terminal device 101. As a result, there is an issue (first issue) where the terminal device 101 cannot connect to the communication apparatus desired by the user. It should be noted that this issue may also occur in the method in which a connection is established using Wi-Fi and the method in which a connection is established using Bluetooth^{®}.

To solve such an issue, according to the present embodiment, the process using AccessorySetupKit is performed to establish a connection between the communication apparatus 151 and the terminal device 101. In the method in which the process using AccessorySetupKit is performed to establish a connection between the communication apparatus 151 and the terminal device 101, in a case where a plurality of communication apparatuses is discovered by the OS, the user can select a desired apparatus from the plurality of discovered apparatuses.

Further, as described above, AccessorySetupKit may be used to establish a connection between the communication apparatus 151 and the terminal device 101. However, using AccessorySetupKit has another issue, which will be described.

As described above, according to the present embodiment, in order to connect the communication apparatus 151 to an AP using the connection setting process, the terminal device 101 receives a password, which is used to connect to the AP, input from the user via the predetermined application. Then, the terminal device 101 transmits the input password to the communication apparatus 151 via the predetermined application. Subsequently, the communication apparatus 151 connects to the AP using the received password. As described above, according to the present embodiment, it is necessary for the terminal device 101 to receive the password input from the user via the predetermined application. At this time, it may be necessary for the user to check the password to input the password, and since a setting application includes a function that presents the password to the user, the user may check the password using the setting application.

It should be noted that the setting application refers to a standard OS application pre-installed in the terminal device 101 without being installed into the terminal device 101 using a store application. Furthermore, the setting application is also an application for configuring various settings for the terminal device 101 and makes it possible to configure various settings, including settings related to Wi-Fi connection, for the terminal device 101 and manage the AP password.

In order for the user to check the password using the setting application, it is necessary to activate the setting application and transition the setting application to the foreground. Thus, for example, in a case where an operation is performed by the user to activate the setting application in a state where the predetermined application operates in the foreground, the predetermined application is transitioned to the background. Examples of an operation for displaying the setting application include an operation for displaying a home screen including an application icon for activating the setting application, an operation of pressing a shortcut icon for activating the setting application, and an operation of moving the setting application operating in the background to the foreground.

Incidentally, the predetermined application can control a Wi-Fi connection established between the terminal device 101 and the communication apparatus 151 based on an instruction issued to the OS by the predetermined application without using information acquired through the execution of AccessorySetupKit so that the Wi-Fi connection is prevented from being disconnected even in a case where the predetermined application is transitioned to the background and a predefined period of time has passed. However, the predetermined application cannot control a Wi-Fi connection established between the terminal device 101 and the communication apparatus 151 based on an instruction issued to the OS by the predetermined application using information acquired through the execution of AccessorySetupKit so that the Wi-Fi connection is prevented from being disconnected even in a case where the predetermined application is transitioned to the background and a predefined period of time has passed. In other words, the Wi-Fi connection established between the terminal device 101 and the communication apparatus 151 based on information acquired through the execution of AccessorySetupKit is a connection not configured to be controlled by the process performed by the predetermined application to prevent the Wi-Fi connection from being disconnected even in a case where the predetermined application is transitioned to the background. Thus, the Wi-Fi connection established between the terminal device 101 and the communication apparatus 151 based on an instruction issued to the OS by the predetermined application using the information acquired through the execution of AccessorySetupKit is invariably disconnected in a case where the predetermined application is transitioned to the background and the predefined period of time has passed.

In other words, the method in which AccessorySetupKit is used to establish a connection between the terminal device 101 and the communication apparatus 151 has an issue (issue 2) where the Wi-Fi connection may be disconnected in a case where the predetermined application is transitioned to the background due to a cause such as the setting application being activated by the user to check the password after the Wi-Fi connection is established based on the information acquired through the execution of AccessorySetupKit. It should be noted that in a case where the Wi-Fi connection between the terminal device 101 and the communication apparatus 151 is disconnected, even if the predetermined application returns to the foreground again, it is no longer possible to configure the connection setting for the communication apparatus 151.

To solve such an issue, according to the present embodiment, a process is performed to prevent the predetermined application from being transitioned to the background at least until the connection setting process is complete after the Wi-Fi connection is established between the terminal device 101 and the communication apparatus 151 based on the information acquired through the execution of AccessorySetupKit.

Specifically, as a first method for solving the issue, the predetermined application displays a screen at a predetermined timing to prompt the user to check the password for connecting to the external AP.

The predetermined timing refers to a timing after the predetermined application is activated and before a predetermined connection is established between the terminal device 101 and the communication apparatus 151. It should be noted that the predetermined connection refers to a Wi-Fi connection not configured to be controlled by the process performed by the predetermined application to prevent the Wi-Fi connection from being disconnected even in a case where the predetermined application is transitioned to the background. Further, the predetermined connection refers to a Wi-Fi connection established using the information acquired through the execution of AccessorySetupKit. Thus, according to the present embodiment, the Wi-Fi connection between the terminal device 101 and the communication apparatus 151 based on the information acquired through the execution of AccessorySetupKit will be referred to as the predetermined connection.

Further, as a second method for solving the issue, the predetermined application displays a notification screen to prevent the predetermined application from being transitioned to the background during the predetermined period. It should be noted that the predetermined period refers to a period including at least a portion of the period during which the predetermined connection between the terminal device 101 and the communication apparatus 151 is maintained.

### Processes Performed by the Predetermined Application according to the Present Embodiment

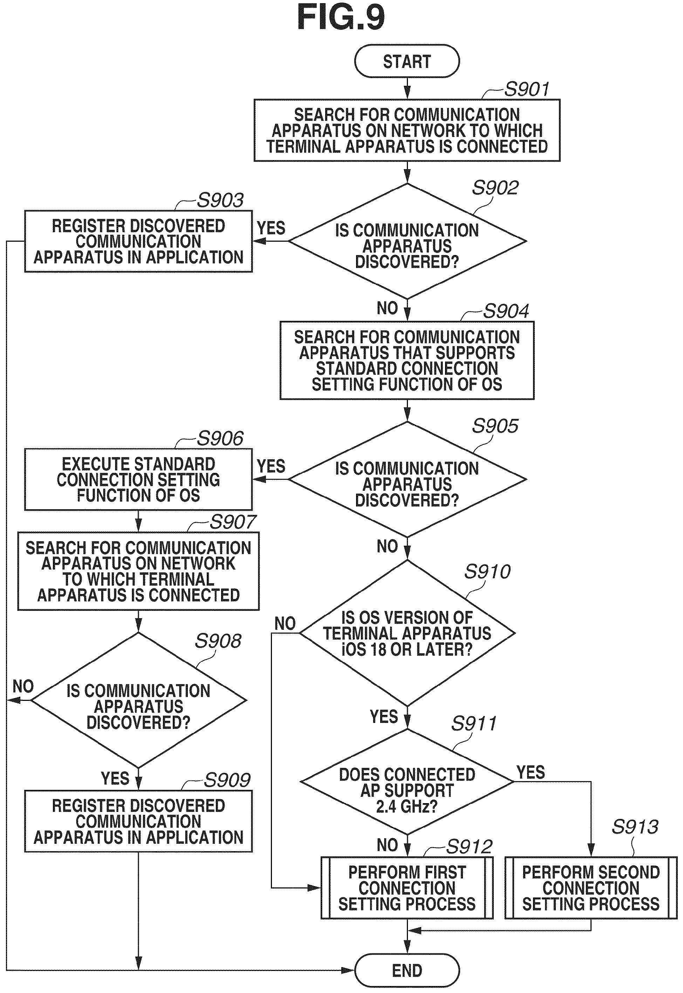

Fig. 9 is a flowchart illustrating an example of a process in which the terminal device 101 determines a method for the connection setting process using the predetermined application according to the present embodiment. Further, each process in the flowchart illustrated in Fig. 9 is realized, for example, by the CPU 103 by loading the predetermined application stored in a memory, such as the ROM 104, into the RAM 105 and executing the loaded application.

In step S901, the predetermined application performs broadcasting or multicasting via a Wi-Fi network to which the terminal device 101 is connected, thereby searching for a communication apparatus that belongs to the Wi-Fi network.

In step S902, the predetermined application determines whether a communication apparatus is discovered by the search (the search performed in step S901) via the Wi-Fi network to which the terminal device 101 is connected. In a case where the result of the determination is "YES" (YES in step S902), the processing proceeds to step S903. In a case where the result of the determination is "NO" (NO in step S902), the processing proceeds to step S904.

In step S903, the predetermined application acquires information about the communication apparatus discovered by the search via the Wi-Fi network to which the terminal device 101 is connected from the communication apparatus and registers the communication apparatus in the predetermined application. It should be noted that at this time, the predetermined application may automatically set the registered communication apparatus as the selected communication apparatus. Subsequently, the predetermined application terminates the process and displays the home screen of the predetermined application.

In step S904, the predetermined application searches for a communication apparatus that supports a standard built-in connection setting function of the OS (hereinafter, "the standard connection setting function of the OS"). The standard connection setting function of the OS refers to a function that transmits infrastructure setting information to the communication apparatus 151, is pre-installed in the terminal device 101, and is executed by a program (hereinafter, "the standard OS program") provided by an OS vendor of the terminal device 101. The standard OS program can acquire, from the OS, information (e.g., the password for connecting to the AP) that cannot be acquired by other application programs. Thus, a password that is input by the user before connecting to the access point 131 and is retained by the OS is automatically acquired from the OS using the standard OS program, and the standard connection setting function of the OS transmits the password to the communication apparatus 151. Therefore, the standard connection setting function of the OS is, in other words, a function capable of transmitting the password to the communication apparatus 151 without requiring the user to input the password to the terminal device 101 after the terminal device 101 has connected to the access point 131. The standard connection setting function of the OS uses, for example, the Hyper Text Transfer Protocol (HTTP) for communication between the terminal device 101 and the communication apparatus 151.

In step S905, the predetermined application determines whether a communication apparatus is discovered by the search performed by the standard connection setting function of the OS. In a case where the result of the determination is "YES" (YES in step S905), the processing proceeds to step S906. In a case where the result of the determination is "NO" (NO in step S905), the processing proceeds to step S910.

In step S906, the predetermined application executes the standard connection setting function of the OS. In other words, the predetermined application activates the standard OS program and causes the standard OS program to execute the standard connection setting function of the OS.

In step S907, as in step S901, a communication apparatus search is performed via the Wi-Fi network to which the terminal device 101 is connected.

In step S908, the predetermined application determines whether a communication apparatus is discovered by the search (the search performed in step S907) via the Wi-Fi network to which the terminal device 101 is connected. In a case where the result of the determination is "YES" (YES in step S908), the processing proceeds to step S909. In a case where the result of the determination is "NO" (NO in step S908), the predetermined application terminates the process and displays the home screen of the predetermined application.

In step S909, as in step S903, the predetermined application registers the communication apparatus 151 discovered by the search in the predetermined application. Subsequently, the predetermined application terminates the process and displays the home screen of the predetermined application.

In step S910, the predetermined application determines whether the version of the OS of the terminal device 101 is a specific version or later. It should be noted that the specific version refers to the version of the OS that supports AccessorySetupKit. It should be noted that according to the present embodiment, the OS of the terminal device 101 is iOS^{®} or iPadOS^{®}. Further, the specific version refers to, specifically, either iOS 18 or iPadOS 18. In a case where the result of the determination is "YES" (YES in step S910), the processing proceeds to step S911. In a case where the result of the determination is "NO" (NO in step S910), the processing proceeds to step S912.

In step S911, the predetermined application determines whether the AP to which the terminal device 101 is connected supports the 2.4 GHz frequency band. In a case where the result of the determination is "YES" (YES in step S911), the processing proceeds to step S913. In a case where the result of the determination is "NO" (NO in step S911), the processing proceeds to step S912.

In step S912, the predetermined application performs a first connection setting process. Further, in step S913, the predetermined application performs a second connection setting process.

As described above, according to the present embodiment, the process of steps S910 and S911 controls whether to perform the first connection setting process or the second connection setting process based on the predetermined conditions.

It should be noted that the predetermined conditions refer to a condition where the OS of the terminal device 101 is iOS 18 or later or iPadOS 18 or later and a condition where the AP to which the terminal device 101 is connected at step S911 supports the 2.4 GHz frequency band.

In a case where either one of the processes is complete, the predetermined application terminates the process and displays the home screen of the predetermined application. It should be noted that details of the connection setting process will be described below. The reason for controlling whether to perform the first connection setting process or the second connection setting process based on whether the AP to which the terminal device 101 is connected supports the 2.4 GHz frequency band will be described. According to the present embodiment, the AP to which the terminal device 101 is connected at step S911 may be identified as the AP to which the communication apparatus 151 is to connect. Then, according to the present embodiment, the predetermined application acquires, from the communication apparatus 151, a list of APs discovered by the search performed by the communication apparatus 151 as described below. Then, the predetermined application determines whether the list includes the AP to which the communication apparatus 151 is to connect. In the second connection setting process, a situation where the list does not include the AP to which the communication apparatus 151 is to connect should be prevented.

In other words, a situation where the list does not include an AP for which the password has been verified should be prevented. Specifically, in such a situation, the user cannot select an AP for which the password has been verified, and the user is forced to select one of the APs included in the list, which necessitates the user checking the password again for the AP selected from the AP list using the setting application after the predetermined connection is established. When the setting application is activated to check the password, the predetermined application is transitioned to the background. As a result, the predetermined connection may be disconnected, and the connection setting process may fail.

However, for example, a communication apparatus may be capable of communicating over 2.4 GHz but may not be capable of communicating over 5 GHz. In this case, the list of APs indicated by the acquired information includes an AP supporting communication over 2.4 GHz but does not include an AP supporting communication over 5 GHz. As a result, in a case where the AP to which the terminal device 101 is connected at step S911 supports the 5 GHz frequency band and, consequently, the AP that supports the 5 GHz frequency band is identified as the AP to which the communication apparatus 151 is to connect, a situation where the list does not include the AP to which the communication apparatus 151 is to connect occurs. Thus, the situation where the list does not include the AP to which the communication apparatus 151 is to connect can be prevented by performing the second connection setting process only in a case where the AP to which the terminal device 101 is connected at step S911 supports the 2.4 GHz frequency band. This ultimately reduces the need to re-check or input the password for the AP after the predetermined connection is established. In other words, the predetermined application is prevented from being transitioned to the background to check the password for the AP identified as the AP to which the communication apparatus 151 is to connect.

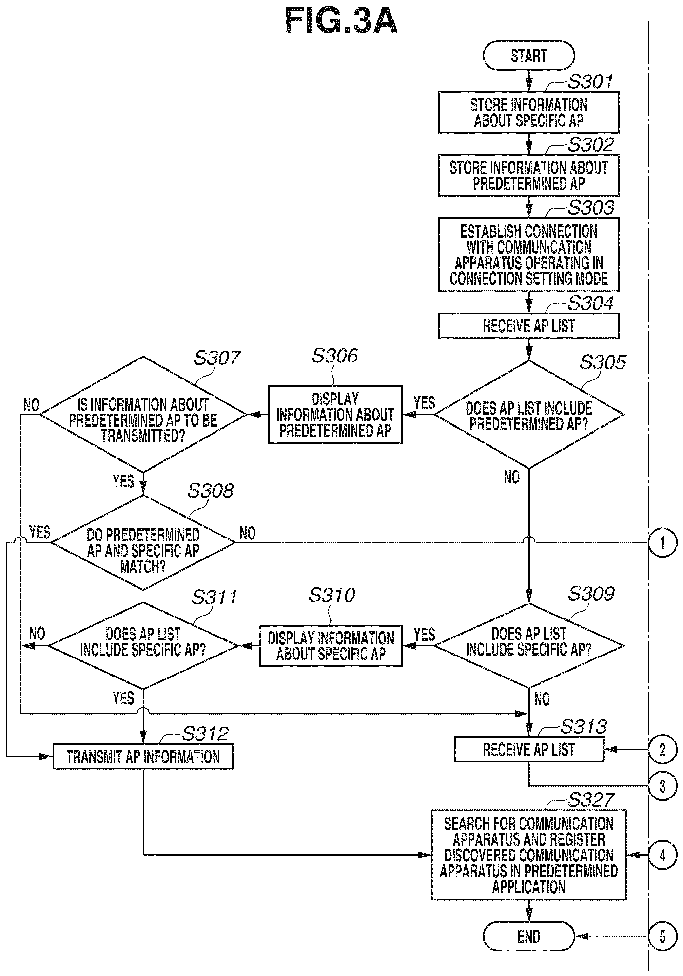

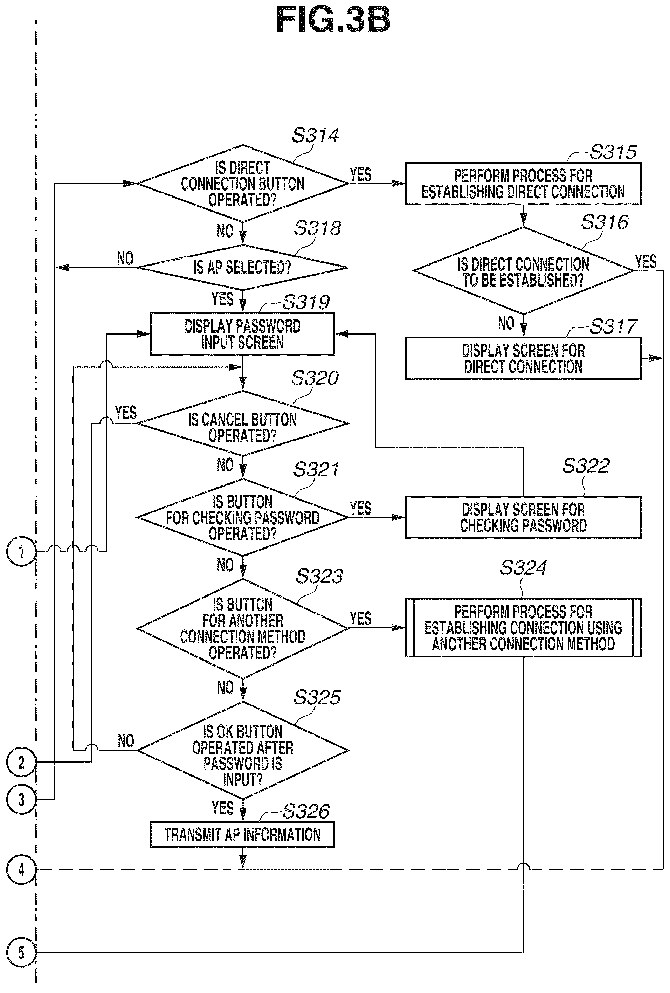

Figs. 3A and 3B are a flowchart illustrating an example of the first connection setting process according to the present embodiment.

It should be noted that according to the present embodiment, the OS of the terminal device 101 is iOS or iPadOS. In this case, there are two types of connections of the terminal device 101 established based on an instruction from the predetermined application in the first connection setting process. The first type is a connection (hereinafter, "first-type connection") that is disconnected in a case where the predetermined application is transitioned to the background. The second type is a connection (hereinafter, "second-type connection") that is not disconnected even in a case where the predetermined application is transitioned to the background. Specifically, the first-type connection is disconnected by the OS in a case where the predetermined application is transitioned to the background and remains there for a predetermined time (e.g., 15 seconds). The second-type connection is maintained without being disconnected by the OS even in a case where the predetermined application is transitioned to the background and remains there for the predetermined time. It should be noted that in the first connection setting process, the predetermined application displays a screen to prompt the user to check the password on a Wi-Fi settings screen displayed by the setting application after a connection is established between the communication apparatus 151 operating in the connection setting mode and the terminal device 101. It should be noted that the Wi-Fi settings screen refers to a screen for configuring a setting related to the Wi-Fi connection of the terminal device 101 among various settings that can be executed by the setting application. When the user activates the setting application by following the screen, the predetermined application is transitioned to the background. As a result, the connection between the communication apparatus 151 operating in the connection setting mode and the terminal device 101 is disconnected. Thus, according to the present embodiment, the connection between the communication apparatus 151 operating in the connection setting mode and the terminal device 101 is controlled to be the second-type connection. It should be noted that according to the present embodiment, the second-type connection established by the first connection setting process corresponds to a connection established without using information acquired through the execution of AccessorySetupKit.

Each process in the flowchart in Figs. 3A and 3B is realized, for example, by the CPU 103 by loading the predetermined application stored in a memory, such as the ROM 104, into the RAM 105 and executing the loaded application. Further, the flowchart in Figs. 3A and 3B is started in a case where an operation is performed on the screen displayed by the predetermined application to perform the connection setting process. It should be noted that the flowchart in Figs. 3A and 3B may be started in a case where the predetermined application is activated.

In step S301, the predetermined application acquires, from the selected communication apparatus 151, information about the AP to which the selected communication apparatus 151 is currently connected via Wi-Fi, and stores the acquired information. Hereinafter, the AP to which the selected communication apparatus 151 is currently connected via Wi-Fi will be referred to as the specific AP. It should be noted that the acquired information about the specific AP includes an SSID and a password. Further, the information about the specific AP is acquired, for example, via an infrastructure connection or a direct connection between the terminal device 101 and the communication apparatus 151. Further, the information about the specific AP is not acquired in a case where the terminal device 101 and the selected communication apparatus 151 are currently unable to communicate or a case where the selected communication apparatus 151 is currently not connected to the AP via Wi-Fi. It should be noted that the timing of the acquisition of the information about the specific AP is not limited to this timing. For example, the information about the specific AP may be acquired in a case where the predetermined application is activated before the flowchart in Figs. 3A and 3B is started, and in this method, the process of step S301 is skipped. Further, the information about the specific AP may be information acquired and stored by the predetermined application at a previous time when communication was established with the selected communication apparatus 151. Then, the stored information may be acquired at step S301.

In step S302, the predetermined application acquires, from the OS, information about the AP to which the terminal device 101 is currently connected via Wi-Fi, and stores the acquired information. The AP to which the terminal device 101 is currently connected via Wi-Fi is, in other words, an AP to which the terminal device 101 is connected when a process serving as a trigger for starting the flowchart in Figs. 3A and 3B is performed. The process serving as the trigger for starting the flowchart in Figs. 3A and 3B refers to receiving an operation to perform the connection setting process or activating the predetermined application. Hereinafter, the AP to which the terminal device 101 is connected via Wi-Fi at step S301 will be referred to as the predetermined AP. It should be noted that the AP to which the terminal device 101 is connected via Wi-Fi at step S301 corresponds to the AP to which the terminal device 101 is connected via Wi-Fi at the initiation of the flowchart in Fig. 9.

Further, the acquired information about the AP is information that can be acquired from the OS by the predetermined application among various types of information about the AP, and a specific example is an SSID. It should be noted that information about the predetermined AP is not acquired in a case where the terminal device 101 is currently not connected to the AP via Wi-Fi.

In step S303, the predetermined application performs a process for establishing a connection between the communication apparatus 151 operating in the connection setting mode and the terminal device 101. Specifically, the predetermined application instructs the OS to establish a connection between the communication apparatus 151 operating in the connection setting mode and the terminal device 101. More specifically, the predetermined application calls a first API for establishing a connection with the terminal device 101 while setting at least a portion of the character string of the SSID of the communication apparatus 151 operating in the connection setting mode as an argument. Then, the OS searches for an apparatus having an SSID including the character string and establishes a connection between a discovered apparatus (i.e., the communication apparatus 151 operating in the connection setting mode) and the terminal device 101. It should be noted that the communication apparatus 151 to which the terminal device 101 is connected by this process is the communication apparatus 151 that is the first apparatus discovered by the search performed in step S303.

It should be noted that according to the present embodiment, a connection that is not disconnected even in a case where the predetermined application is transitioned to the background is established as a connection with the terminal device 101 that is established based on an instruction from the predetermined application. The connection is maintained without being disconnected by the OS even in a case where the predetermined application is transitioned to the background and remains there for the predetermined time. Specifically, in step S303, the predetermined application calls the first API while setting a flag to instruct the OS to establish the connection described above. Consequently, the OS establishes a connection between the communication apparatus 151 operating in the connection setting mode and the terminal device 101. This prevents the connection between the communication apparatus 151 operating in the connection setting mode and the terminal device 101 from being disconnected even in a case where the predetermined time has passed since the predetermined application started operating in the background.

In step S304, the predetermined application acquires, from the communication apparatus 151, information about a list of APs discovered by the search performed by the communication apparatus 151. Each AP discovered by the search performed by the communication apparatus 151 is an AP to which the communication apparatus 151 can connect. The AP to which the communication apparatus 151 can connect refers to an AP that is located within communication range of the communication apparatus 151 and supports a capability of the communication apparatus 151. For example, in a case where the communication apparatus 151 is capable of communicating over 2.4 GHz but is not capable of communicating over 5 GHz, the AP list indicated by the acquired information includes an AP supporting communication over 2.4 GHz but does not include an AP supporting communication over 5 GHz.

In step S305, the predetermined application determines whether the AP list indicated by the information acquired in step S304 includes the AP (the predetermined AP) indicated by the information stored in step S302. In a case where the result of the determination is "YES" (YES in step S305), the processing proceeds to step S306. In a case where the result of the determination is "NO" (NO in step S305), the processing proceeds to step S309.

In step S306, the predetermined application displays information about the predetermined AP and a confirmation screen to prompt the user to confirm whether to determine the predetermined AP as the AP to which the communication apparatus 151 is to connect. The displayed information is the information stored in step S302, and an example is the SSID of the predetermined AP.

In step S307, the predetermined application determines whether to transmit the information about the predetermined AP to the communication apparatus 151. This determination is, in other words, a determination of whether the user has confirmed to determine the predetermined AP as the AP to which the communication apparatus 151 is to connect. Thus, in a case where input is made on the confirmation screen to specify that the predetermined AP is determined as the AP to which the communication apparatus 151 is to connect, the result of the determination is "YES", and the predetermined AP is identified as the AP to which the communication apparatus 151 is to connect. On the other hand, in a case where input is made on the confirmation screen to specify that the predetermined AP is not determined as the AP to which the communication apparatus 151 is to connect, the result of the determination is "NO". In a case where the result of the determination is "YES" (YES in step S307), the processing proceeds to step S308. In a case where the result of the determination is "NO" (NO in step S307), the processing proceeds to step S313.

In step S308, the predetermined application determines whether the predetermined AP matches the specific AP. In a case where the predetermined AP matches the specific AP, this indicates that the predetermined application stores the password for the predetermined AP. Therefore, this determination is a determination of whether the predetermined application stores the password for the predetermined AP. In other words, this determination is a determination of whether the password for the predetermined AP is stored in a storage area accessible to the predetermined application. In a case where the result of the determination is "YES" (YES in step S308), the processing proceeds to step S312, and the information about the predetermined AP is transmitted to the communication apparatus 151. In a case where the result of the determination is "NO" (NO in step S308), the processing proceeds to step S319, and a password input screen is displayed.

It should be noted that in step S308, the determination of whether the predetermined AP matches the specific AP does not have to be performed. The determination performed in step S308 may be a process of determining whether the predetermined AP is the AP that corresponds to the information stored in the storage area accessible to the predetermined application.

An example of a case where the result of the determination is "YES" in the method is a case where the password for connecting to the predetermined AP has been input to the predetermined application by the user and transmitted to the communication apparatus 151 in the connection setting process previously performed by the predetermined application. An example of a case where the result of the determination is "NO" in the method is a case where the password for connecting to the predetermined AP has not been input to the predetermined application by the user in the connection setting process previously performed by the predetermined application.

In step S309, which is performed in a case where the result of the determination in step S305 is "NO", the predetermined application determines whether the AP list indicated by the information acquired in step S304 includes the AP (the specific AP) indicated by the information stored in step S301. In a case where the result of the determination is "YES" (YES in step S309), the processing proceeds to step S310. In a case where the result of the determination is "NO" (NO in step S309), the processing proceeds to step S313.

In step S310, the predetermined application displays information about the specific AP and a confirmation screen to prompt the user to confirm whether to determine the specific AP as the AP to which the communication apparatus 151 is to connect. The displayed information is the information stored in step S301, and an example is the SSID of the specific AP.

In step S311, the predetermined application determines whether to transmit the information about the specific AP to the communication apparatus 151. This determination is, in other words, a determination of whether the user has confirmed to determine the specific AP as the AP to which the communication apparatus 151 is to connect. Thus, in a case where input is made on the confirmation screen to specify that the specific AP is determined as the AP to which the communication apparatus 151 is to connect, the result of the determination is "YES", and the specific AP is identified as the AP to which the communication apparatus 151 is to connect. On the other hand, in a case where input is made on the confirmation screen to specify that the specific AP is not determined as the AP to which the communication apparatus 151 is to connect, the result of the determination is "NO". In a case where the result of the determination is "YES" (YES in step S311), the processing proceeds to step S312. In a case where the result of the determination is "NO" (NO in step S311), the processing proceeds to step S313.

In step S312, the predetermined application transmits, to the communication apparatus 151, information for connecting to the AP identified as the AP to which the communication apparatus 151 is to connect. The transmitted information includes the SSID of the AP identified as the AP to which the communication apparatus 151 is to connect and the password for connecting to the AP identified as the AP to which the communication apparatus 151 is to connect. It should be noted that the AP identified as the AP to connect to is the predetermined AP or the specific AP. In other words, the transmitted password is the password for the specific AP and the password acquired from the communication apparatus 151 in step S301. In other words, the transmitted password is the password stored in the predetermined application (the password stored in the storage area accessible to the predetermined application).

Thus, after the AP to which the communication apparatus 151 is to connect is identified, the predetermined application transmits the password to the communication apparatus 151 without receiving password input from the user. It should be noted that after information for connecting to the AP identified as the AP to which the communication apparatus 151 is to connect is transmitted to the communication apparatus 151, the communication apparatus 151 terminates the connection setting mode and establishes a connection with the AP identified as the AP to which the communication apparatus 151 is to connect using the received information. It should be noted that as the connection setting mode is terminated, the connection between the communication apparatus 151 and the terminal device 101 is disconnected. The terminal device 101 is reconnected to the predetermined AP, which is the AP to which the terminal device 101 was connected before connecting to the communication apparatus 151, by a reconnection function of the OS. Subsequently, the processing proceeds to step S327. It should be noted that the method in which the processing proceeds to step S327 is not intended to be limiting, and the processing may proceed to a process of displaying a screen to search for the communication apparatus 151 via the Wi-Fi network to which the terminal device 101 is connected, as in step S710, which will be described below.

In a case where the result of the determination in step S307, S309, or S311 is "NO", or the result of the determination in step S320 is "YES", step S313 is performed.

In step S313, the predetermined application displays the AP list indicated by the information acquired in step S304. According to the present embodiment, a screen that includes the list includes a direct connection button. In a case where the list includes an AP to which the user wishes to connect the communication apparatus 151, the AP is identified as the AP to which the communication apparatus 151 is to connect.

In a case where the list does not include the AP, the user operates the direct connection button.

In step S314, the predetermined application determines whether the direct connection button is operated. In a case where the result of the determination is "YES" (YES in step S314), the processing proceeds to step S315. In a case where the result of the determination is "NO" (NO in step S314), the processing proceeds to step S318.

In step S315, the predetermined application performs a process for establishing a direct connection between the communication apparatus 151 and the terminal device 101. Specifically, first, the predetermined application transmits direct setting information to the communication apparatus 151. Subsequently, the predetermined application receives, from the communication apparatus 151, connection information for establishing a direct connection with the communication apparatus 151. Then, the predetermined application instructs the OS to establish a connection between the communication apparatus 151 operating in the direct connection mode and the terminal device 101. More specifically, the predetermined application identifies the SSID of the communication apparatus 151 operating in the direct connection mode from the received connection information. Then, the predetermined application calls the first API for establishing a connection with the terminal device 101 while setting at least a portion of the character string of the identified SSID as an argument. Then, the OS searches for an apparatus having an SSID including the character string and displays a confirmation screen to prompt the user to confirm whether to establish a direct connection between a discovered apparatus (the communication apparatus 151 operating in the direct connection mode) and the terminal device 101. It should be noted that in this process, the predetermined application may call the first API while setting a flag to instruct the OS to establish a connection that is not disconnected even in a case where the predetermined application is transitioned to the background. In other words, the direct connection between the communication apparatus 151 and the terminal device 101 may be established as the second-type connection. However, this method is not intended to be limiting, and the predetermined application may call the first API without setting the flag in the process and establish the direct connection between the communication apparatus 151 and the terminal device 101 as the first-type connection.

In step S316, the predetermined application determines whether a user operation indicating that a direct connection is to be established is performed on the confirmation screen displayed by the OS in step S315. This determination is performed in a case where a notification indicating that an operation is performed on the confirmation screen displayed by the OS is received from the OS by the predetermined application. It should be noted that in a case where a user operation indicating that a direct connection is to be established is performed, the OS establishes a direct connection, whereas in a case where a user operation indicating that a direct connection is not to be established is performed, the OS does not establish a direct connection. In a case where the result of the determination is "YES" (YES in step S316), the processing proceeds to step S327. In a case where the result of the determination is "NO" (NO in step S316), the processing proceeds to step S317.

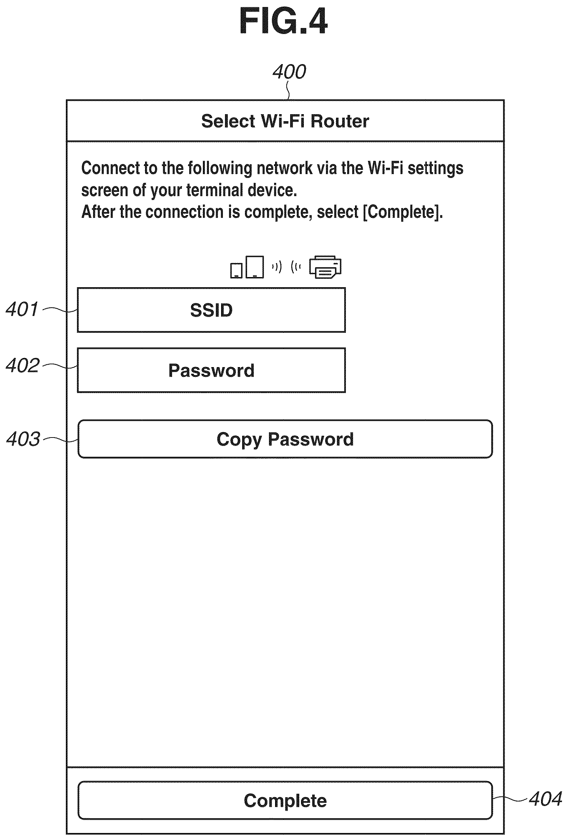

In step S317, the predetermined application displays a screen for direct connection. Fig. 4 illustrates an example of the screen displayed in this process. A screen 400 includes an SSID display region 401, a password display region 402, a region 403 for copying the password, and a complete button 404. The SSID display region 401 is a region where the SSID of the communication apparatus 151 operating in the direct connection mode is displayed. The password display region 402 is a region where the password for the communication apparatus 151 operating in the direct connection mode is displayed. In a case where the region 403 is operated, the predetermined application copies the password for the communication apparatus 151 operating in the direct connection mode to a clipboard of the terminal device 101. Since the password for the communication apparatus 151 operating in the direct connection mode is copied, the user can easily input the password on the setting application and establish a direct connection using the setting application. It should be noted that the screen 400 may include a message to prompt the user to establish a direct connection via the Wi-Fi settings screen displayed by the setting application or a message to prompt the user to operate the complete button 404 in a case where the direct connection establishment is complete. In a case where the complete button 404 is operated, the processing proceeds to step S327. It should be noted that the method in which the processing proceeds to step S327 is not intended to be limiting, and the processing may proceed to a process of displaying a screen to search for the communication apparatus 151 via the Wi-Fi network to which the terminal device 101 is connected, as in step S710, which will be described below.

In step S318, which is performed in a case where the result of the determination in step S314 is "NO", the predetermined application determines whether an AP is selected from the displayed AP list by the user. In a case where the result of the determination is "YES" (YES in step S318), the AP selected from the AP list is identified as the AP to which the communication apparatus 151 is to connect, and the processing proceeds to step S319. In a case where the result of the determination is "NO" (NO in step S318), the processing returns to step S314 to wait until an operation is received.

In step S319, the predetermined application displays the password input screen to receive password input for connecting to the AP identified as the AP to which the communication apparatus 151 is to connect.

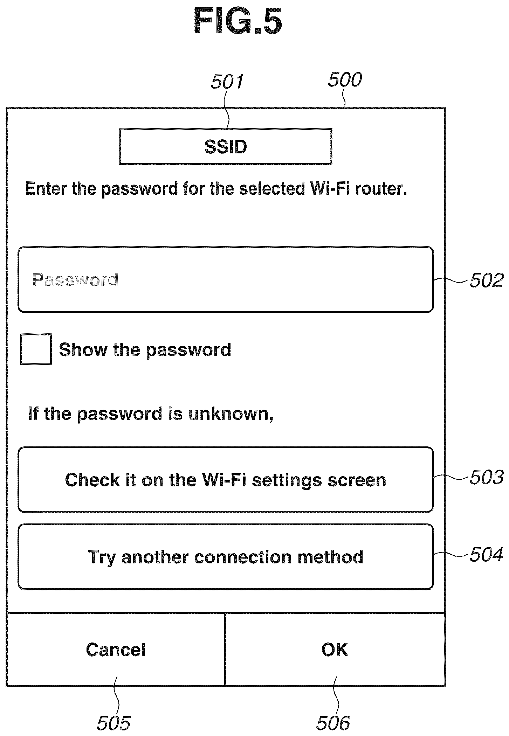

It should be noted that the password input screen may be displayed as a pop-up at the top of the AP list. Fig. 5 illustrates an example of a screen displayed in the process. A password input screen 500 includes an SSID display region 501, a password input box 502, a button 503 for checking the password, a button 504 for another connection method, a cancel button 505, and an OK button 506. The SSID display region 501 is a region where the SSID of the AP identified as the AP to which the communication apparatus 151 is to connect is displayed. The password input box 502 is a region where the password for the AP identified as the AP to which the communication apparatus 151 is to connect is input and received from the user. It should be noted that the AP identified as the AP to connect to is the predetermined AP or the AP selected from the displayed AP list in step S313. The button 503 for checking the password is a button related to a function that displays a password on the Wi-Fi settings screen using the setting application. The button 504 for another connection method is a button for displaying a manual for another connection method. According to the present embodiment, another connection method refers to a connection method different from the method in which the predetermined application transmits setting information to the communication apparatus 151 to establish a connection between the communication apparatus 151 and another apparatus. In other words, another connection method refers to a method for establishing a connection between the communication apparatus 151 and another apparatus using a method other than the method in which the predetermined application transmits setting information to the communication apparatus 151.

It should be noted that depending on the version of the OS of the terminal device 101, it may not be possible to display the password for the AP to which the terminal device 101 is currently connected or the password for the AP to which the terminal device 101 is previously connected on the Wi-Fi settings screen. Specifically, for example, in a case where the version of the OS of the terminal device 101 is earlier than iOS 16 or iPadOS 16, the password cannot be displayed on the Wi-Fi settings screen using the setting application. Thus, in step S319, the predetermined application may identify the version of the OS of the terminal device 101 and determine whether the identified version does not allow the password to be displayed on the Wi-Fi settings screen using the setting application. Then, in a case where the result of the determination is "YES", the predetermined application displays the password input screen without including the button 503 for checking the password. Further, in a case where the result of the determination is "NO", the predetermined application may display the password input screen including the button 503 for checking the password. It should be noted that the password input screen without including the button 503 for checking the password includes the other buttons and regions of the screen 500. In other words, the button 504 for another connection method is displayed regardless of the version of the OS. It should be noted that in a case where, for example, the predetermined application only supports the OS of the version that allows the password to be displayed on the Wi-Fi settings screen using the setting application, it is not necessary to determine the version or perform control to switch the display screen based on the result of the version determination.

In step S320, the predetermined application determines whether a user operation on the cancel button 505 is received. In a case where the result of the determination is "YES" (YES in step S320), the processing proceeds to step S313, and the AP list is displayed. In a case where the result of the determination is "NO" (NO in step S320), the processing proceeds to step S321.

In step S321, the predetermined application determines whether a user operation on the button 503 for checking the password is received. In a case where the result of the determination is "YES" (YES in step S321), the processing proceeds to step S322. In a case where the result of the determination is "NO" (NO in step S321), the processing proceeds to step S323.

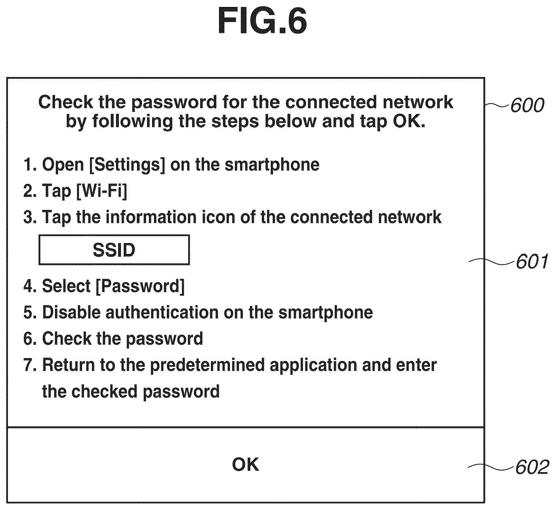

In step S322, the predetermined application displays a screen for checking the password. According to the present embodiment, the screen for checking the password is a predetermined screen that presents a method for checking the password for the AP on the Wi-Fi settings screen displayed by the setting application. Fig. 6 illustrates an example of a screen displayed in the process. According to the present embodiment, the screen for checking the password is not a webpage displayed by a web browser via internet communication. In other words, the screen is a screen displayed on the predetermined application based on information stored in advance in the predetermined application. The web browser refers to, for example, an internal browser of the predetermined application or a browser of a browser application different from the predetermined application. However, this configuration is not intended to be limiting, and the screen for checking the password may be a webpage displayed by the web browser. Further, the screen for checking the password may be displayed as a pop-up at the top of the AP list.

Fig. 6 illustrates the screen for checking the password that is displayed on the predetermined application. A screen 600 includes a region 601 where a method (hereinafter, "the password checking method") for checking the password for the AP on the Wi-Fi settings screen displayed by the setting application is presented and an OK button 602. In the region 601, sentences describing the operation for checking the password on the Wi-Fi settings screen are displayed as sentences describing the password checking method. It should be noted that in the region 601, the SSID of the AP identified as the AP to which the communication apparatus 151 is to connect may be displayed. It should be noted that the AP identified as the AP to connect to is the predetermined AP or the AP selected from the displayed AP list in step S313. Further, a sentence may be displayed in the region 601 to prompt the user to return to the predetermined application (to transition the predetermined application to the foreground again) after checking the password. After checking the sentences, the user activates the setting application from a home screen of the terminal device 101 or the like and performs the operation specified by the sentences to check the password. Then, after checking the password, the user causes the predetermined application to operate in the foreground again, operates the button 602, and inputs the password on the predetermined application. It should be noted that all terminal devices equipped with iOS of a predetermined version or later or iPadOS of a predetermined version or later include a function for checking the password on the Wi-Fi settings screen. Thus, the screen 600 does not include a button for another connection method. However, this configuration is not intended to be limiting, and the screen 600 may include a button for another connection method. Further, a terminal device equipped with iOS or iPadOS cannot activate the setting application based on an instruction from the predetermined application. Thus, the screen 600 does not include a button for displaying the Wi-Fi settings screen. However, this configuration is not intended to be limiting, and the screen 600 may include a button for displaying the Wi-Fi settings screen in a case where the terminal device equipped with iOS or iPadOS is configured to be capable of activating the setting application based on an instruction from the predetermined application. In a case where the button 602 is operated, the processing proceeds to step S319.

In step S323, which is performed in a case where the result of the determination in step S321 is "NO", the predetermined application determines whether a user operation on the button for another connection method is received. In a case where the result of the determination is "YES" (YES in step S323), the processing proceeds to step S324. In a case where the result of the determination is "NO" (NO in step S323), the processing proceeds to step S325. Details of the process of step S324 will be described below.

In step S325, the predetermined application determines whether a user operation on the OK button 506 is received in a state where the password is input into the password input box 502. It should be noted that the user has operated the button 503 for checking the password and can input the password into the password input box 502 after checking the password on the Wi-Fi settings screen by following the sentences displayed on the screen illustrated in Fig. 6. Further, in a case where the password has been copied on the Wi-Fi settings screen to the clipboard, the user can input the password by pasting the copied password into the password input box 502. In a case where the result of the determination is "YES" (YES in step S325), the processing proceeds to step S326. In a case where the result of the determination is "NO" (NO in step S325), the processing returns to step S320 to wait until a user operation on the password input screen 500 is received.

In step S326, the predetermined application transmits, to the communication apparatus 151, information for connecting to the AP identified as the AP to which the communication apparatus 151 is to connect. The transmitted information includes, specifically, the password input into the password input box 502 and the SSID of the AP identified as the AP to which the communication apparatus 151 is to connect. It should be noted that the AP identified as the AP to connect to is the predetermined AP or the AP selected from the AP list displayed in step S313. It should be noted that after the information for connecting to the AP identified as the AP to which the communication apparatus 151 is to connect is transmitted to the communication apparatus 151, the communication apparatus 151 terminates the connection setting mode and establishes a connection with the AP identified as the AP to which the communication apparatus 151 is to connect using the received information. It should be noted that as the connection setting mode is terminated, the connection between the communication apparatus 151 and the terminal device 101 is disconnected. The terminal device 101 is reconnected to the predetermined AP, which is the AP to which the terminal device 101 was connected before connecting to the communication apparatus 151, by the reconnection function of the OS. Subsequently, the processing proceeds to step S327.

In step S327, the predetermined application searches for the communication apparatus 151 via the Wi-Fi network to which the terminal device 101 is connected. For example, in a case where the AP identified as the AP to which the communication apparatus 151 is to connect is the predetermined AP, since the communication apparatus 151 and the terminal device 101 both connect to the predetermined AP, the communication apparatus 151 is discovered by the search. However, there may be a case where the AP identified as the AP to which the communication apparatus 151 is to connect is an AP other than the predetermined AP and the communication apparatus 151 connects to the AP other than the predetermined AP or a case where the communication apparatus 151 has failed to connect to the AP due to incorrect password input. In such cases, the communication apparatus 151 is not discovered by the search. In a case where the communication apparatus 151 is discovered by the search, information about the communication apparatus 151 is acquired from the communication apparatus 151 via the Wi-Fi network to which the terminal device 101 is connected, and the communication apparatus 151 is registered in the predetermined application. It should be noted that at this time, the predetermined application may automatically set this registered communication apparatus 151 as the selected communication apparatus 151. Subsequently, the predetermined application terminates the process and displays the home screen of the predetermined application.

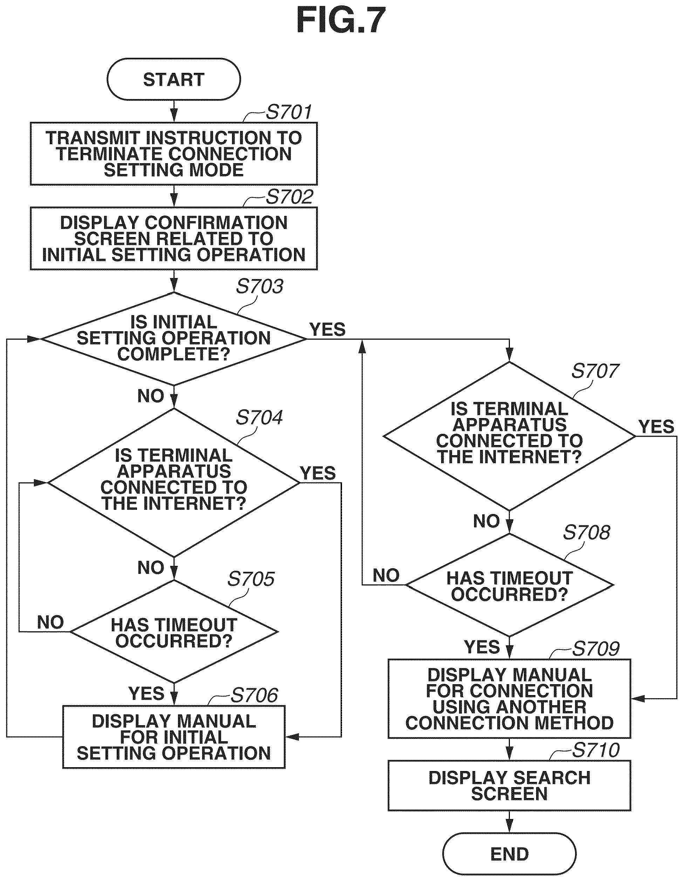

Fig. 7 is a flowchart illustrating an example of a process performed by the terminal device 101 using the predetermined application according to the present embodiment. Each process in the flowchart in Fig. 7 is realized, for example, by the CPU 103 by loading the predetermined application stored in a memory, such as the ROM 104, into the RAM 105 and executing the loaded application. The process in the flowchart corresponds to the process of step S324.

In step S701, the predetermined application transmits information to the communication apparatus 151 to instruct the communication apparatus 151 to terminate the operation in the connection setting mode. Consequently, the communication apparatus 151 terminates the connection setting mode and restarts the operation in the previous mode in which the communication apparatus 151 had operated before the communication apparatus 151 started operating in the connection setting mode. It should be noted that as the connection setting mode is terminated, the connection between the communication apparatus 151 and the terminal device 101 is disconnected. The terminal device 101 is reconnected to the predetermined AP, which is the AP to which the terminal device 101 was connected before connecting to the communication apparatus 151, by the reconnection function of the OS.

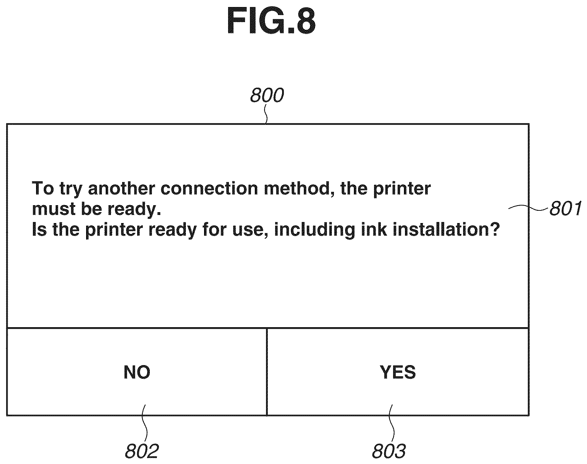

In step S702, the predetermined application displays a confirmation screen to prompt the user to confirm whether an initial setting operation on the communication apparatus 151 is complete. The initial setting operation on the communication apparatus 151 refers to an operation that is performed when the communication apparatus 151 is powered on for the first time (after arrival). According to the present embodiment, the initial setting operation includes, for example, removing a coloured tape (e.g. an orange tape) from the communication apparatus 151, mounting a print head on the communication apparatus 151, refilling a recording agent (such as ink or toner) in the communication apparatus 151, refilling a sheet in the communication apparatus 151, setting the date and time on the communication apparatus 151, and the like. Further, an initial setting process performed as part of the initial setting operation by the communication apparatus 151 includes, for example, a print head cleaning process, a registration process (registration adjustment process) for detecting a sheet and adjusting an ink landing position on the sheet during printing, initiating the operation in the connection setting mode, and the like. Thus, the confirmation screen can also be referred to as a screen that prompts the user to confirm whether the initial setting process by the communication apparatus 151 is complete. It should be noted that the operations included in the initial setting operation and the processes included in the initial setting process are not limited to those described above and may vary depending on the type of the communication apparatus 151, the printing method, or the like. Fig. 8 illustrates an example of a screen displayed in the process.

A screen 800 includes a message 801, a NO button 802, and a YES button 803. The message 801 includes a message notifying the user that the initial setting operation on the communication apparatus 151 must be complete in order to try another connection method and a message prompting the user to confirm whether the initial setting operation on the communication apparatus 151 is complete. In a case where the initial setting operation on the communication apparatus 151 is complete, the user operates the YES button 803, whereas in a case where the initial setting operation on the communication apparatus 151 is not complete, the user operates the NO button 802.

In step S703, the predetermined application determines whether a user operation on the YES button 803 is received. In a case where a user operation on the NO button 802 is received, the result of this determination is "NO". In a case where the result of the determination is "YES" (YES in step S703), the processing proceeds to step S707. In a case where the result of the determination is "NO" (NO in step S703), the processing proceeds to step S704.

In step S704, the predetermined application determines whether the terminal device 101 is connected to the internet. As described above, as the connection between the communication apparatus 151 and the terminal device 101 is disconnected in step S701, the process of reconnecting the terminal device 101 is performed by the OS, but an operation on the confirmation screen may be performed before the reconnection to the AP via Wi-Fi is complete. In other words, an operation on the confirmation screen may be performed in a state where no connection is established with the internet via a Wi-Fi connection to the AP. In this case, it is not possible to display a webpage in the process of step S706. The determination is performed to display the webpage correctly in the process of step S706. In the process, specifically, the predetermined application calls an API to confirm whether the terminal device 101 is connected to the internet, and receives, from the OS, a notification indicating whether the terminal device 101 is connected to the internet.

Then, the determination is performed by the predetermined application based on the content of the received notification. It should be noted that the notification from the OS indicates that the terminal device 101 is connected to the internet in a case where the terminal device 101 is connected to the internet via a Wi-Fi connection to the AP. Further, the notification from the OS may indicate that the terminal device 101 is connected to the internet in a case where the terminal device 101 is connected to the internet not via a Wi-Fi connection to the AP but via mobile data communication.

Further, the process in the determination is not limited to the process described above. For example, in the determination, the terminal device 101 may call an API for identifying the SSID of the currently connected AP and receive, from the OS, a notification indicating the SSID of the AP to which the terminal device 101 is currently connected.

Then, in a case where the received notification indicates an SSID different from the SSID of the AP enabled by the communication apparatus 151 operating in the connection setting mode, the predetermined application determines that the result of the determination is "YES". In a case where the received notification indicates the SSID of the AP enabled by the communication apparatus 151 operating in the connection setting mode, the predetermined application may determine that the result of the determination is "NO". In other words, the determination may be a determination of whether the terminal device 101 is currently connected to an AP different from the AP enabled by the communication apparatus 151 operating in the connection setting mode. Further, in a case where the received notification indicates the SSID of the predetermined AP, the predetermined application may determine that the result of the determination is "YES", whereas in a case where the received notification indicates an SSID different from the SSID of the predetermined AP, the predetermined application may determine that the result of the determination is "NO". In a case where the result of the determination is "YES" (YES in step S704), the processing proceeds to step S706. In a case where the result of the determination is "NO" (NO in step S704), the processing proceeds to step S705.

In step S705, the predetermined application determines whether the time that has passed since receiving the operation on the confirmation screen displayed in step S702 has exceeded a predetermined threshold. In other words, the predetermined application determines whether the time that has passed since receiving the operation on the confirmation screen displayed in step S702 has exceeded a timeout limit. The predetermined threshold is, for example, 10 seconds. In a case where the result of the determination is "YES" (YES in step S705), the processing proceeds to step S706. In a case where the result of the determination is "NO" (NO in step S705), the processing returns to step S704.

In step S706, the predetermined application performs a process for displaying a manual for the initial setting operation on the communication apparatus 151. Specifically, the predetermined application displays a webpage that displays the manual for the initial setting operation on the communication apparatus 151 using the internal browser of the predetermined application (the browser in the application). It should be noted that information for displaying the webpage is acquired from a predetermined server via a connection to the internet. Thus, in a case where the communication apparatus 151 is connected to the internet, the webpage is successfully displayed. In a case where the communication apparatus 151 is not connected to the internet, the webpage is not successfully displayed, and the browser displays a notification screen indicating that the communication apparatus 151 is not connected to the internet. It should be noted that according to the present embodiment, the webpage is displayed by the internal browser of the predetermined application, thereby making it possible for the predetermined application to continue operating in the foreground. The manual for the initial setting operation on the communication apparatus 151 includes content providing the user with step-by-step descriptions of a specific operation method for each operation to be performed as the initial setting operation on the communication apparatus 151. It should be noted that the predetermined application may display a webpage for selecting a device model of the communication apparatus 151 before displaying the webpage that displays the manual for the initial setting operation on the communication apparatus 151. Then, in a case where a device model is selected on the page, the manual for the initial setting operation corresponding to the selected device model may be displayed. It should be noted that the manual for the initial setting operation on the communication apparatus 151 may be displayed by not the internal browser of the predetermined application but a browser outside the predetermined application. In this case, this outside browser that displays the manual is transitioned to the foreground, and the predetermined application is transitioned to the background. Further, the manual for the initial setting operation on the communication apparatus 151 may be displayed without using a browser by the predetermined application as content stored in advance in the predetermined application, instead of being displayed as a webpage acquired via the internet. It should be noted that a screen displayed by the internal browser of the predetermined application is closed in a case where the user presses a close button on the screen. Further, the screen displayed by the internal browser of the predetermined application is displayed on the confirmation screen displayed in step S702. Thus, as the screen displayed by the internal browser of the predetermined application is closed, the terminal device 101 becomes ready to receive an operation on the confirmation screen again. Accordingly, after this process, the processing returns to step S703.

It should be noted that while the processing proceeds to step S706 in a case where the result of the determination in step S705 is "YES" in the above-described method, this method is not intended to be limiting. The predetermined application may display a notification message or the like indicating that the communication apparatus 151 is not connected to the internet on the screen of the predetermined application without attempting to display the webpage using the browser in a case where the result of the determination in step S705 is "YES".

In step S707, which is performed in a case where the result of the determination in step S703 is "YES", the predetermined application determines whether the terminal device 101 is connected to the internet. This process is similar to step S704. In a case where the result of the determination is "YES" (YES in step S707), the processing proceeds to step S709. In a case where the result of the determination is "NO" (NO in step S707), the processing proceeds to step S708.

In step S708, the predetermined application determines whether the time that has passed since receiving the operation on the confirmation screen displayed in step S702 has exceeded a predetermined threshold. This process is similar to step S705. In a case where the result of the determination is "YES" (YES in step S708), the processing proceeds to step S709. In a case where the result of the determination is "NO" (NO in step S708), the processing returns to step S707.

In step S709, the predetermined application performs a process for displaying a manual for another connection method. Specifically, the predetermined application displays a webpage that displays the manual for another connection method using the internal browser of the predetermined application (the browser in the application). It should be noted that information for displaying the webpage is acquired from a predetermined server via a connection to the internet. Thus, in a case where the communication apparatus 151 is connected to the internet, the webpage is successfully displayed. In a case where the communication apparatus 151 is not connected to the internet, the webpage is not successfully displayed, and the browser displays a notification screen indicating that the communication apparatus 151 is not connected to the internet. It should be noted that according to the present embodiment, the webpage is displayed by the internal browser of the predetermined application, thereby making it possible for the predetermined application to continue operating in the foreground. The manual for another connection method includes content describing a specific operation method for establishing a connection between the communication apparatus 151 and an AP using another connection method. Specific examples of another connection method include a method in which a list of APs discovered by a search performed by the communication apparatus 151 is displayed on the screen of the communication apparatus 151 and a Wi-Fi connection is established between an AP selected from the displayed list by the user and the communication apparatus 151. Further, specific examples of another connection method also include a method in which a Wi-Fi connection is established between an AP and the communication apparatus 151 using Wi-Fi Protected Setup (WPS). Further, specific examples of another connection method also include a method in which a wired LAN connection is established between an AP and the communication apparatus 151 using a wired LAN cable. It should be noted that the predetermined application may display a webpage for selecting a device model of the communication apparatus 151 before displaying the webpage that displays the manual for the initial setting operation on the communication apparatus 151. Then, in a case where a device model is selected on the page, the manual for another connection method corresponding to the selected device model may be displayed. It should be noted that the manual for another connection method for the communication apparatus 151 may be displayed by not the internal browser of the predetermined application but a browser outside the predetermined application. In this case, this outside browser that displays the manual is transitioned to the foreground, and the predetermined application is transitioned to the background. Further, the manual for another connection method may be displayed without using a browser by the predetermined application as content stored in advance in the predetermined application, instead of being displayed as a webpage acquired via the internet.

In step S710, the predetermined application displays a search screen to search for the communication apparatus 151 via the Wi-Fi network to which the terminal device 101 is connected. The display of the search screen is executed under the internal browser in a state where the webpage is displayed by the internal browser. Therefore, in a case where a close button is operated and the internal browser is closed, the search screen is displayed. The search screen includes a button for issuing an instruction to start searching for the communication apparatus 151 via the Wi-Fi network to which the terminal device 101 is connected. In a case where the button is pressed, the predetermined application searches for the communication apparatus 151 via the Wi-Fi network to which the terminal device 101 is connected. Then, the predetermined application displays a list of communication apparatuses 151 discovered by the search. It should be noted that the predetermined application only displays the communication apparatus 151 that supports the predetermined application among the plurality of communication apparatuses 151 discovered by the search. The communication apparatus 151 that supports the predetermined application refers to the communication apparatus 151 that is provided by a vendor providing the predetermined application. It should be noted that the search may be performed using a method by which only the communication apparatus 151 that is provided by the vendor providing the predetermined application is discovered while the communication apparatus 151 that is provided by another vendor is not discovered. In a case where a communication apparatus 151 is selected from the displayed list, the predetermined application acquires information about the selected communication apparatus 151 from the selected communication apparatus 151 via the Wi-Fi network to which the terminal device 101 is connected. Subsequently, the selected communication apparatus 151 is registered in the predetermined application. Subsequently, the process in the flowchart is terminated.

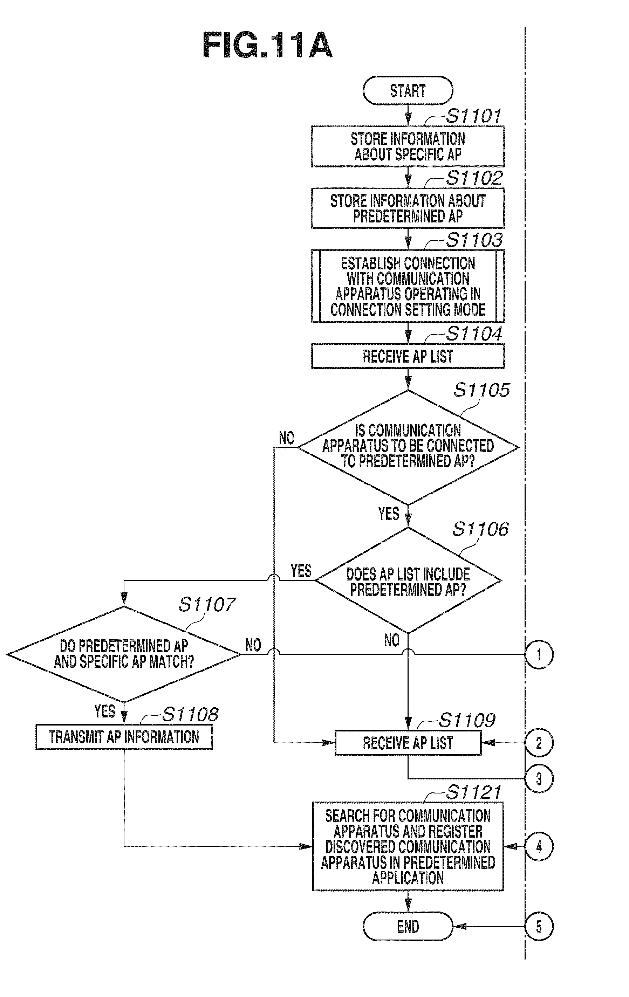

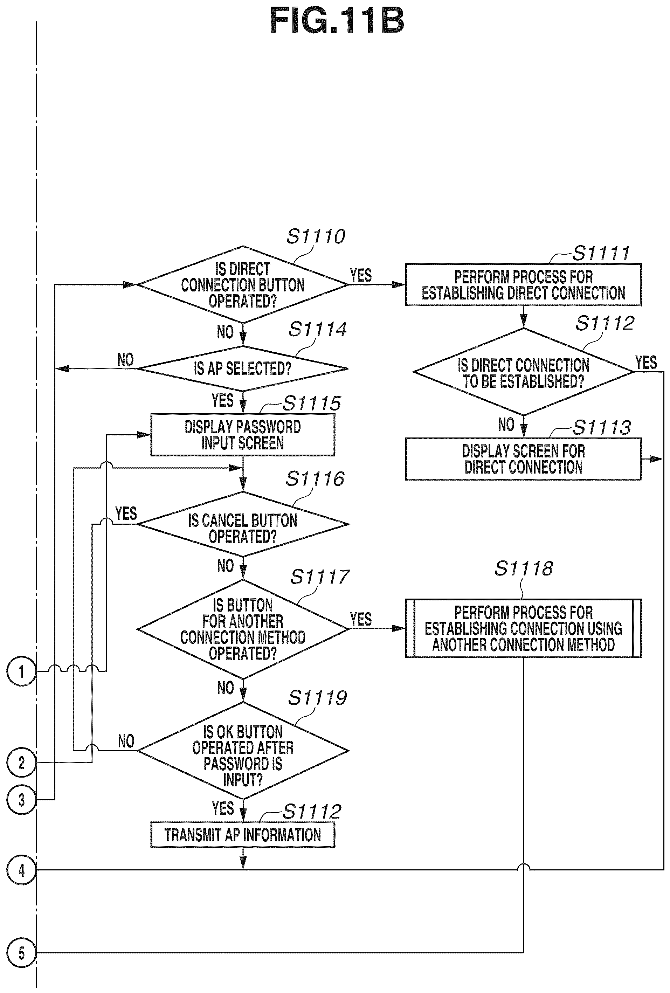

Figs. 11A and 11B are a flowchart illustrating an example of the second connection setting process according to the first embodiment. It should be noted that each process in the flowchart illustrated in Figs. 11A and 11B is realized, for example, by the CPU 103 by loading the predetermined application stored in a memory, such as the ROM 104, into the RAM 105 and executing the loaded application.

In step S1101, as in step S301, the predetermined application acquires the specific AP and stores the acquired specific AP.

In step S1102, the predetermined application acquires the predetermined AP from the OS and stores the acquired predetermined AP. It should be noted that according to the present embodiment, the predetermined AP in the second connection setting process refers to the AP to which the terminal device 101 is connected via Wi-Fi at step S1101.

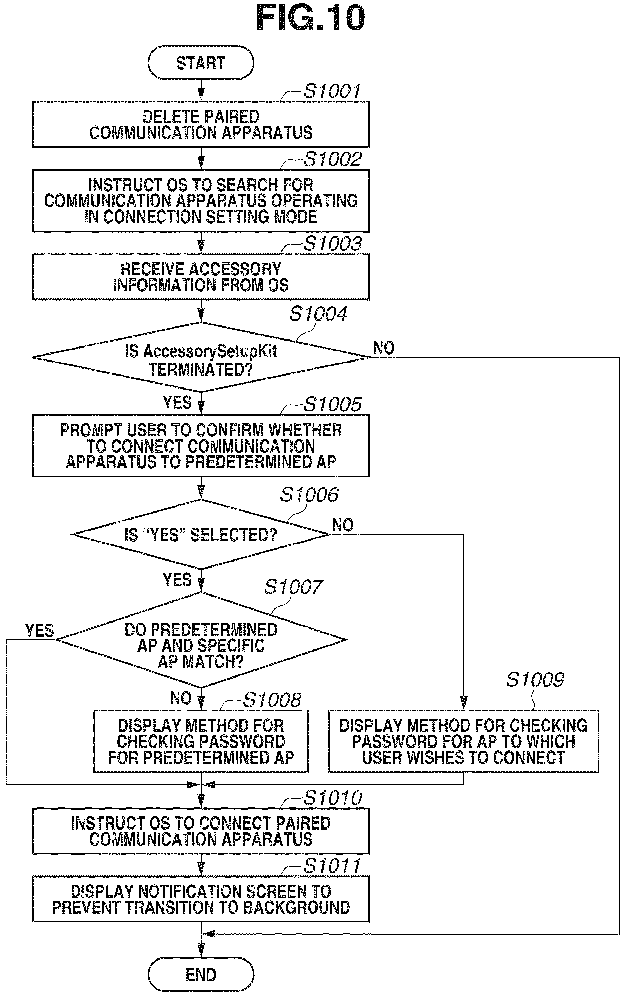

In step S1103, the predetermined application performs a process for establishing a connection between the communication apparatus 151 operating in the connection setting mode and the terminal device 101. Details of this process are illustrated in the flowchart in Fig. 10, so that redundant descriptions are omitted.

Fig. 10 is a flowchart illustrating an example of the process (step S1103 in Fig. 11A) related to AccessorySetupKit in the second connection setting process according to the present embodiment. Further, each process in the flowchart in Fig. 10 is realized, for example, by the CPU 103 by loading the predetermined application stored in a memory, such as the ROM 104, into the RAM 105 and executing the loaded application.

In step S1001, the predetermined application controls the setting application to delete information for managing an accessory as a paired accessory so that the paired accessory will be treated as an unpaired accessory. It should be noted that a communication apparatus managed as a paired accessory will not be discovered by the OS in a future accessory search during execution of AccessorySetupKit. Thus, the predetermined application instructs the OS to delete the paired communication apparatus before performing an accessory search. As a result, the communication apparatus managed as a paired accessory is deleted from a paired accessory list displayed by the setting application.

In step S1002, the predetermined application instructs the OS to execute AccessorySetupKit. The instruction to execute AccessorySetupKit is, in other words, instructing the OS to search for the communication apparatus 151 operating in the connection setting mode. It should be noted that, specifically, the predetermined application notifies the OS of a character string indicating at least a portion of an SSID of an accessory to be searched and image data corresponding to the accessory to be searched and calls a second API for searching for an accessory in the process.

It should be noted that an SSID of a communication apparatus operating in the connection setting mode consists of a common character string common to a plurality of communication apparatuses provided by a vendor and an individual character string that differs for each communication apparatus. For example, the common character string differs for each vendor and is based on a vendor name, a communication apparatus name, a device model name, and a model number. The individual character string may be a random character string or a serial number of the apparatus. The character string transmitted from the predetermined application to the OS in the process is the common character string included in the SSID of the communication apparatus operating in the connection setting mode, and the individual character string is not transmitted.

In step S1003, the predetermined application receives accessory information from the OS. It should be noted that the accessory information includes a full SSID corresponding to the accessory. Subsequently, the processing proceeds to step S1004.

In step S1004, the predetermined application determines whether AccessorySetupKit is terminated. Specifically, the predetermined application determines whether a notification indicating that AccessorySetupKit is terminated is received from the OS. In a case where the notification is received, the predetermined application determines that AccessorySetupKit is terminated, whereas in a case where the notification is not received, the predetermined application determines that AccessorySetupKit is not terminated. In a case where the result of the determination is "YES" (YES in step S1004), the processing proceeds to step S1005. On the other hand, in a case where the result of the determination is "NO" (NO in step S1004), the process is terminated, and the home screen is displayed.

In step S1005, the predetermined application displays information about the AP to which the terminal device 101 is currently connected and a confirmation screen to prompt the user to confirm whether to determine the AP as the AP to which the communication apparatus 151 is to connect. It should be noted that the AP to which the terminal device 101 is connected is the predetermined AP. Thus, the displayed information is the information stored in step S1102 in Fig. 11A, and an example is the SSID of the predetermined AP.

In step S1006, the predetermined application determines whether to determine the predetermined AP as the AP to which the communication apparatus 151 is to connect. This determination is, in other words, a determination of whether the user has confirmed to determine the predetermined AP as the AP to which the communication apparatus 151 is to connect. Thus, in a case where input is made on the confirmation screen to specify that the predetermined AP is determined as the AP to which the communication apparatus 151 is to connect, the result of the determination is "YES", and the predetermined AP is identified as the AP to which the communication apparatus 151 is to connect. On the other hand, in a case where input is made on the confirmation screen to specify that the predetermined AP is not determined as the AP to which the communication apparatus 151 is to connect, the result of the determination is "NO". In a case where the result of the determination is "YES" (YES in step S1006), the processing proceeds to step S1007. In a case where the result of the determination is "NO" (NO in step S1006), the processing proceeds to step S1009.

In step S1007, the predetermined application determines whether the predetermined AP matches the specific AP. Since details of this process are similar to those of the process of step S308, redundant descriptions are omitted. In a case where the result of the determination is "YES" (YES in step S1007), the processing proceeds to step S1010 without performing a process of displaying the screen for checking the password in step S1008 or S1009. In a case where the result of the determination is "NO" (NO in step S1007), the processing proceeds to step S1008.

In step S1008, the predetermined application displays the screen for checking the password. An example of the screen displayed in this process is similar to that illustrated in Fig. 6 and includes the region 601 where the password checking method is presented and the OK button 602. It should be noted that the region 601 is not limited to a region for presenting the password checking method and may be a region for displaying a sentence to prompt the user to check the password. Further, since the AP identified as the AP to connect to in the process is the predetermined AP, the SSID of the predetermined AP is displayed as the SSID of the AP on the screen displayed in the process. It should be noted that in a case where the OK button 602 is operated, the processing proceeds to step S1010.

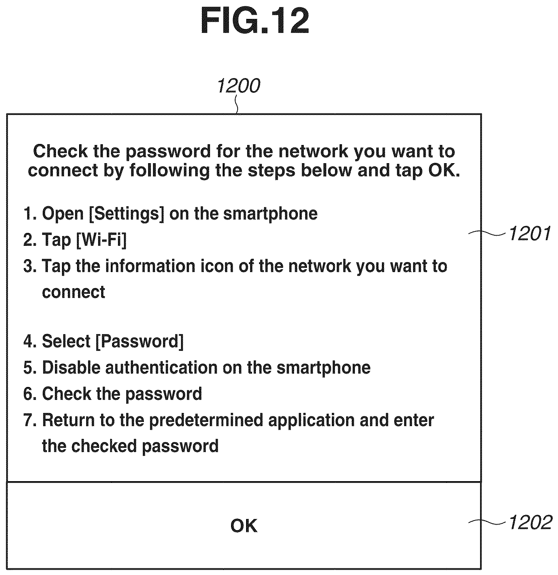

In step S1009, which is performed in a case where the result of the determination in step S1006 is "NO", the predetermined application prompts the user to check the password for the AP to which the user wishes to connect the communication apparatus, and displays a screen for checking the password. Fig. 12 illustrates an example of a screen displayed in the process. A screen 1200 includes a region 1201 where the password checking method is presented and an OK button 1202.

A case where this screen is displayed is a case where the AP to which the communication apparatus 151 is to connect is not identified by the predetermined application, so that the SSID of the AP for which the password is to be checked does not have to be displayed on the screen 1200, unlike the screen in Fig. 6. Further, the region 1201 includes a sentence indicating that the network for which the password is to be checked is the network to which the user wishes to connect the communication apparatus 151. It should be noted that the region 1201 is not limited to a region for presenting the password checking method and may be a region for displaying a sentence to prompt the user to check the password. The rest is similar to those in Fig. 6, so that redundant descriptions are omitted. In a case where the OK button 1202 is operated, the processing proceeds to step S1010.

In step S1010, the predetermined application instructs the OS to establish a connection between the communication apparatus 151, which is the paired accessory, and the terminal device 101.

Specifically, the predetermined application issues the instruction by notifying the OS of the accessory information received from the OS in step S1003 and calling a third API for establishing a connection with the terminal device 101. It should be noted that the third API is an API different from the first API called to establish a connection between the terminal device 101 and the communication apparatus 151 in the first connection setting process. Further, the third API is an API different from the second API called to perform an accessory search in the second connection setting process.

In step S1011, the predetermined application displays a notification screen to prevent the predetermined application from being transitioned to the background during a predetermined period. It should be noted that the predetermined period refers to a period including at least a portion of a period during which a predetermined connection between the terminal device 101 and the communication apparatus 151 is maintained. It should be noted that the predetermined period may include a period other than the period during which the predetermined connection is maintained.

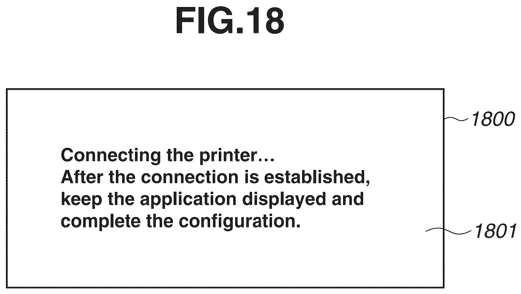

Fig. 18 illustrates a notification screen displayed by the predetermined application to prevent the predetermined application from being transitioned to the background. A screen 1800 includes a region 1801 where a sentence is presented to prevent the predetermined application from being transitioned to the background. For example, the sentence "After the connection is established, keep the predetermined application displayed and complete the configuration" may be displayed on the notification screen. In this case, the predetermined period corresponds to a period including a period from when the notification screen is displayed to when the predetermined connection is established and at least a portion of the period during which the predetermined connection is maintained. Further, for example, the sentence "Keep the predetermined application displayed until the configuration is complete" may be displayed on the notification screen. In this case, the predetermined period corresponds to a period including at least a portion of the period during which the predetermined connection is maintained after the notification screen is displayed.

It should be noted that the notification screen displayed by the predetermined application may be a screen that presents a notification to the user to prevent the predetermined application from being transitioned to the background. In a case where the process in the flowchart is terminated, the processing proceeds to step S1104.

In step S1104, the predetermined application acquires, from the communication apparatus 151, information about a list of APs discovered by the search performed by the communication apparatus 151. Each AP discovered by the search performed by the communication apparatus 151 is as in step S304 described in detail above, so that redundant descriptions are omitted.

In step S1105, it is determined whether the communication apparatus 151 is to be connected to the predetermined AP. In a case where the result of the determination is "YES" (YES in step S1105), the processing proceeds to step S1106. In a case where the result of the determination is "NO" (NO in step S1105), the processing proceeds to step S1109.

In step S1106, the predetermined application determines whether the AP list indicated by the information acquired in step S1104 includes the AP (the predetermined AP) indicated by the information stored in step S1102. In a case where the result of the determination is "YES" (YES in step S1106), the processing proceeds to step S1107. In a case where the result of the determination is "NO" (NO in step S1106), the processing proceeds to step S1109.

In step S1107, as in step S308, the predetermined application determines whether the predetermined AP matches the specific AP. In a case where the result of the determination is "YES" (YES in step S1107), the processing proceeds to step S1108, and information about the predetermined AP is transmitted to the communication apparatus 151. In a case where the result of the determination is "NO" (NO in step S1107), the processing proceeds to step S1115, and the password input screen is displayed.

In step S1108, the predetermined application transmits, to the communication apparatus 151, information for connecting to the AP identified as the AP to which the communication apparatus 151 is to connect. It should be noted that the AP identified as the AP to connect to is the predetermined AP. The transmitted information includes the SSID of the AP identified as the AP to which the communication apparatus 151 is to connect and the password for connecting to the AP identified as the AP to which the communication apparatus 151 is to connect. In other words, the transmitted password is the password for the specific AP and the password acquired from the communication apparatus 151 in step S1101. In other words, the transmitted password is the password stored in the predetermined application (the password stored in the storage area accessible to the predetermined application). Thus, the predetermined application transmits the password to the communication apparatus 151 without receiving password input from the user after the AP to which the communication apparatus 151 is to connect is identified. It should be noted that after the information for connecting to the AP identified as the AP to which the communication apparatus 151 is to connect is transmitted to the communication apparatus 151, the communication apparatus 151 terminates the connection setting mode and connects to the AP identified as the AP to which the communication apparatus 151 is to connect using the received information. After the connection setting mode is terminated, the terminal device 101 reconnects to the predetermined AP using the function of the OS, as in step S312. Subsequently, the processing proceeds to step S1121. It should be noted that the method in which the processing proceeds to step S1121 is not intended to be limiting, and the processing may proceed to a process of displaying a screen to search for the communication apparatus 151 via the Wi-Fi network to which the terminal device 101 is connected, as in step S710, which will be described below.

In step S1109, as in step S313, the predetermined application displays the AP list indicated by the information acquired in step S1104. In a case where the list includes an AP to which the user wishes to connect the communication apparatus 151, the AP is identified as the AP to which the communication apparatus 151 is to connect. In a case where the list does not include the AP, the user operates the direct connection button.

In step S1110, the predetermined application determines whether the direct connection button is operated. In a case where the result of the determination is "YES" (YES in step S1110), the processing proceeds to step S1111. In a case where the result of the determination is "NO" (NO in step S1110), the processing proceeds to step S1114.

In step S1111, as in step S315, the predetermined application performs a process for establishing a direct connection between the communication apparatus 151 and the terminal device 101. Details of this process are similar to those of the process of step S315, so that redundant descriptions are omitted.

In step S1112, as in step S316, the predetermined application determines whether a user operation indicating that a direct connection is to be established is performed on the confirmation screen displayed by the OS in step S1111. Details of this process are similar to those of the process of step S316, so that redundant descriptions are omitted. In a case where the result of the determination is "YES" (YES in step S1112), the processing proceeds to step S1121. In a case where the result of the determination is "NO" (NO in step S1112), the processing proceeds to step S1113.

In step S1113, as in step S317, the predetermined application displays a screen for direct connection.

In step S1114, which is performed in a case where the result of the determination in step S1110 is "NO", the predetermined application determines whether an AP is selected from the displayed AP list by the user. In a case where the result of the determination is "YES" (YES in step S1114), the AP selected from the AP list is identified as the AP to which the communication apparatus 151 is to connect, and the processing proceeds to step S1115. On the other hand, in a case where the result of the determination is "NO" (NO in step S1114), the processing returns to step S1110 to wait for an operation.

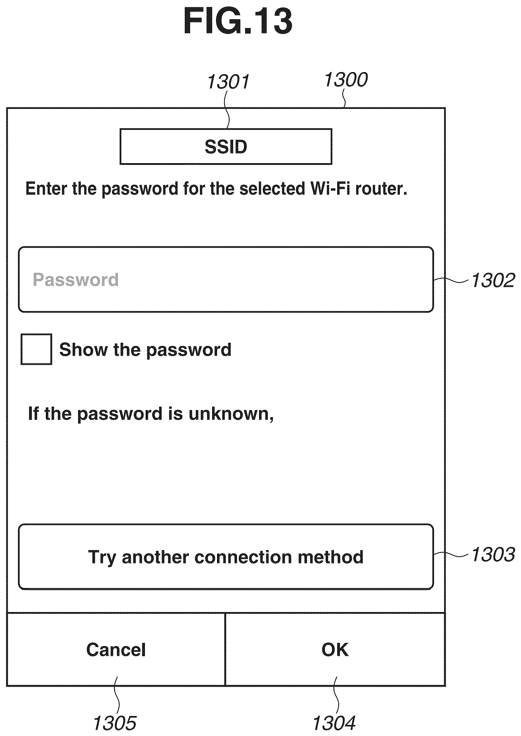

In step S1115, the predetermined application displays the password input screen to receive password input for connecting to the AP identified as the AP to which the communication apparatus 151 is to connect. It should be noted that the password input screen may be displayed as a pop-up at the top of the AP list. Fig. 13 illustrates an example of a screen displayed in the process. A password input screen 1300 includes an SSID display region 1301, a password input box 1302, a button 1303 for another connection method, an OK button 1304, and a cancel button 1305. The SSID display region 1301 is a region where the SSID of the AP identified as the AP to which the communication apparatus 151 is to connect is displayed. The password input box 1302 is a region where the password for the AP identified as the AP to which the communication apparatus 151 is to connect is input and received from the user. It should be noted that the AP identified as the AP to connect to is the predetermined AP or the AP selected from the displayed AP list in step S1109. The button 1303 for another connection method, the OK button 1304, and the cancel button 1305 are similar to the button 504 for another connection method, the OK button 506, and the cancel button 505 illustrated in Fig. 5, so that redundant descriptions are omitted.

In step S1116, the predetermined application determines whether a user operation on the cancel button 1305 is received. In a case where the result of the determination is "YES" (YES in step S1116), the processing proceeds to step S1109, and the AP list is displayed. In a case where the result of the determination is "NO" (NO in step S1116), the processing proceeds to step S1117.

In step S1117, the predetermined application determines whether a user operation on the button 1303 for another connection method is received. In a case where the result of the determination is "YES" (YES in step S1117), the processing proceeds to step S1118. In a case where the result of the determination is "NO" (NO in step S1117), the processing proceeds to step S1119. The process of step S1118 is similar to the details of the flowchart in Fig. 7, so that redundant descriptions are omitted.

In step S1119, as in step S325, the predetermined application determines whether a user operation on the OK button 1304 is received in a state where the password is input into the password input box 1302. In a case where the result of the determination is "YES" (YES in step S1119), the processing proceeds to step S1120. In a case where the result of the determination is "NO" (NO in step S1119), the processing returns to step S1116 to wait until a user operation on the password input screen 1300 is received.

In step S1120, the predetermined application transmits, to the communication apparatus 151, information for connecting to the AP identified as the AP to which the communication apparatus 151 is to connect. The transmitted information includes, specifically, the password input into the password input box 1302 and the SSID of the AP identified as the AP to which the communication apparatus 151 is to connect. It should be noted that the AP identified as the AP to connect to is the predetermined AP or the AP selected from the AP list displayed in step S1109. It should be noted that after the information for connecting to the AP identified as the AP to which the communication apparatus 151 is to connect is transmitted to the communication apparatus 151, the communication apparatus 151 terminates the connection setting mode and establishes a connection with the AP identified as the AP to which the communication apparatus 151 is to connect using the received information. After the connection setting mode is terminated, the terminal device 101 is reconnected to the predetermined AP using the function of the OS, as in step S326. Subsequently, the processing proceeds to step S1121.

In step S1121, as in step S327, the predetermined application searches for the communication apparatus 151 via the Wi-Fi network to which the terminal device 101 is connected. In a case where the communication apparatus 151 is discovered by the search, information about the communication apparatus 151 is acquired from the communication apparatus 151 via the Wi-Fi network to which the terminal device 101 is connected, and the communication apparatus 151 is registered in the predetermined application. It should be noted that at this time, the predetermined application may automatically set this registered communication apparatus 151 as the selected communication apparatus 151. Subsequently, the predetermined application terminates the process and displays the home screen of the predetermined application.

### Second Embodiment

According to the present embodiment, the second connection setting process is performed using a method different from that in the first embodiment.

Specifically, while the first embodiment uses the first and second methods as methods for solving the issue, the second embodiment uses the second and third methods. It should be noted that as the third method for solving the issue, a screen for inputting a password for connecting to an external AP is displayed at a predetermined timing by the predetermined application. It should be noted that the predetermined timing is a timing after the predetermined application is activated and before the predetermined connection between the terminal device 101 and the communication apparatus 151 is established. It should be noted that the present embodiment is similar to the first embodiment, except for the second connection setting process.

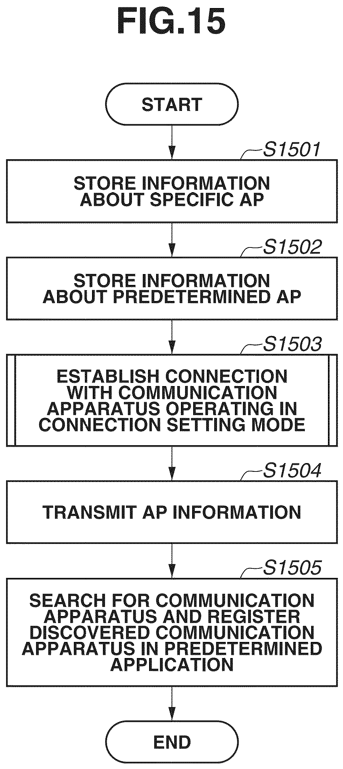

Fig. 15 is a flowchart illustrating an example of the second connection setting process according to the second embodiment. It should be noted that each process in the flowchart illustrated in Fig. 15 is realized, for example, by the CPU 103 by loading the predetermined application stored in a memory, such as the ROM 104, into the RAM 105 and executing the loaded application.

In step S1501, as in steps S301 and S1101, the predetermined application acquires the specific AP and stores the acquired specific AP.

In step S1502, the predetermined application acquires the predetermined AP from the OS and stores the acquired predetermined AP. It should be noted that according to the present embodiment, the predetermined AP in the second connection setting process refers to the AP to which the terminal device 101 is connected via Wi-Fi at step S1501.

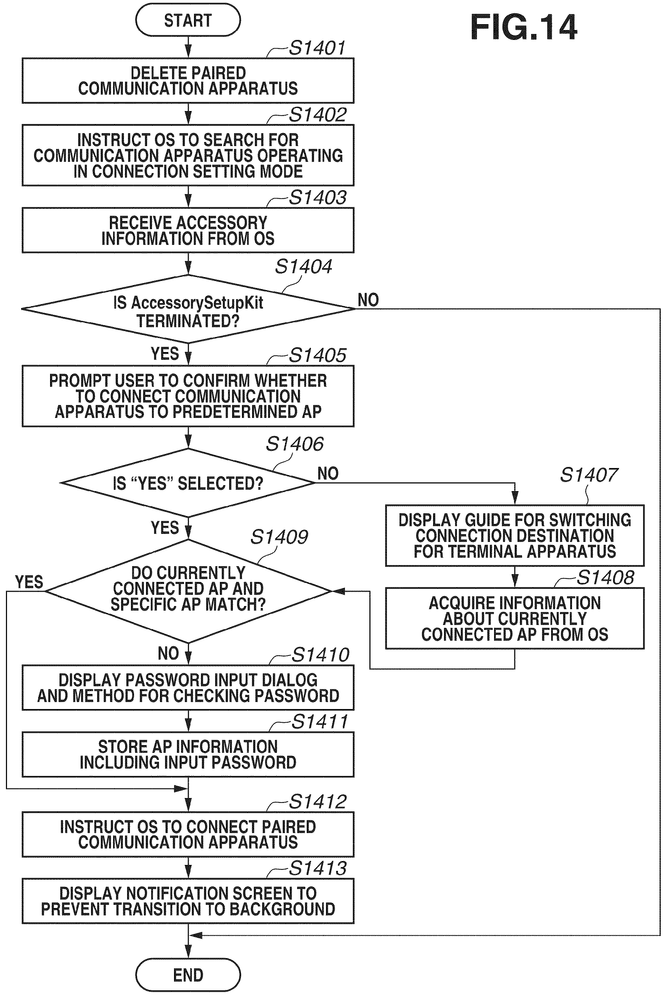

In step S1503, the predetermined application performs a process for establishing a connection between the communication apparatus 151 operating in the connection setting mode and the terminal device 101. Details of this process are illustrated in the flowchart in Fig. 14, so that redundant descriptions are omitted.

Fig. 14 is a flowchart illustrating an example of the process (step S1503 in Fig. 15) related to AccessorySetupKit in the second connection setting process according to the present embodiment. Further, each process in the flowchart in Fig. 14 is realized, for example, by the CPU 103 by loading the predetermined application stored in a memory, such as the ROM 104, into the RAM 105 and executing the loaded application.

Steps S1401 to S1404 are similar to steps S1001 to S1004, so that redundant descriptions are omitted.

It should be noted that in a case where the result of the determination is "YES" in step S1404 (YES in step S1404), the processing proceeds to step S1405. In a case where the result of the determination is "NO" (NO in step S1404), the process is terminated, and the home screen is displayed.

Step S1405 is similar to step S1005, so that redundant descriptions are omitted.

In step S1406, the predetermined application determines whether to determine the predetermined AP as the AP to which the communication apparatus 151 is to connect. In a case where the result of the determination is "YES" (YES in step S1406), the predetermined AP is identified as the AP to which the communication apparatus 151 is to connect, and the processing proceeds to step S1409. In a case where the result of the determination is "NO" (NO in step S1406), the processing proceeds to step S1407.

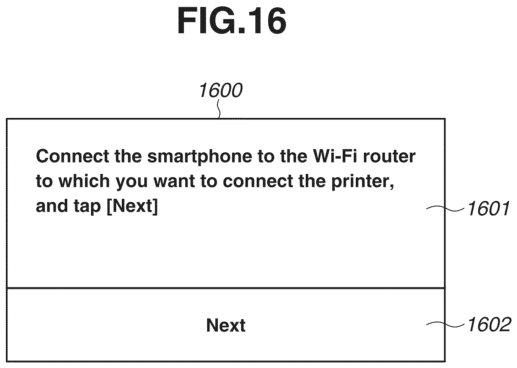

In step S1407, the predetermined application displays a message to prompt the user to connect the terminal device 101 to the AP to which the communication apparatus 151 is to connect. In other words, a guide for switching the connection destination for the terminal device 101 is displayed. Fig. 16 illustrates an example of a screen displayed in this process. According to the present embodiment, the screen that displays the guide for switching the connection destination for the terminal device 101 is not a webpage displayed by the web browser via internet communication. In other words, the screen is a screen displayed on the predetermined application based on information stored in advance in the predetermined application.

Fig. 16 illustrates an example of a screen that is displayed by the predetermined application to display the guide for switching the connection destination for the terminal device 101. A screen 1600 includes a region 1601 where the guide for switching the connection destination for the terminal device 101 is presented and a next button 1602. In a case where the next button 1602 is operated, the processing proceeds to step S1408.

In step S1408, the predetermined application acquires, from the OS, information about the AP selected by the user in step S1407 as the AP to which the user wishes to connect. It should be noted that the predetermined application identifies the currently connected AP corresponding to the information acquired from the OS as the AP to which the communication apparatus 151 is to connect.

In step S1409, the predetermined application determines whether the currently connected AP and the specific AP match. In other words, the predetermined application determines whether the password for the currently connected AP is stored in the application. It should be noted that the currently connected AP is the predetermined AP or the AP corresponding to the AP information acquired from the OS in step S1408. In a case where the result of the determination is "YES" (YES in step S1409), the processing proceeds to step S1412 without performing a process of displaying the password input screen in step S1410 or a process of storing AP information including a password input by the user in step S1411. On the other hand, in a case where the result of the determination is "NO" (NO in step S1409), the processing proceeds to step S1410.

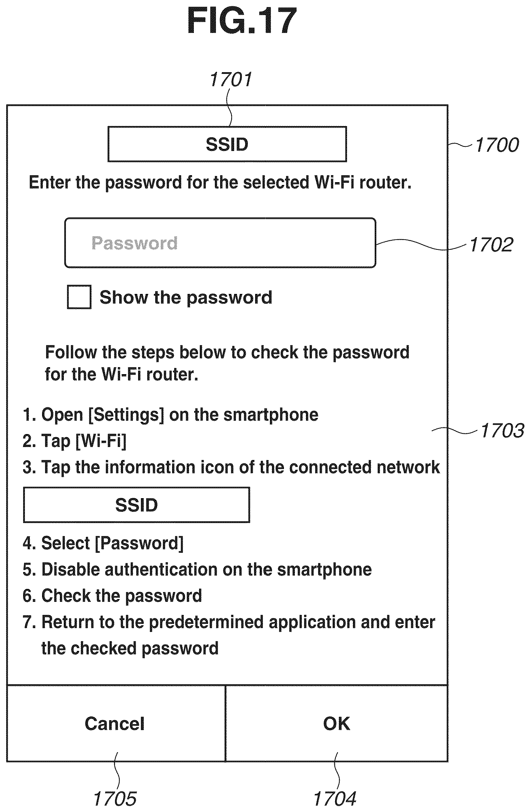

In step S1410, the predetermined application displays the password input screen. Fig. 17 illustrates an example of a screen displayed in this process.

A screen 1700 includes an SSID display region 1701, a password input box 1702, a region 1703 for checking the password, an OK button 1704, and a cancel button 1705. The SSID display region 1701, the password input box 1702, and the region 1703 for checking the password are similar to the SSID display region 501 and the password input box 502 in Fig. 5 and the region 601 presenting the password checking method in Fig. 6. It should be noted that the region 1703 for checking the password is not limited to a region for presenting the method for prompting the user to check the password and may be a region for displaying a sentence to prompt the user to check the password. Further, the region 1703 for checking the password does not have to be included in the screen 1700 in the process. It should be noted that the AP identified as the AP to connect to in the process is the predetermined AP or the AP corresponding to the AP information acquired from the OS in step S1408.

Thus, the SSID of the predetermined AP or the SSID of the AP corresponding to the AP information acquired from the OS in step S1408 is displayed as the SSID of the AP on the screen displayed in the process.

It should be noted that in a case where the OK button 1704 is operated, the processing proceeds to step S1411.

In step S1411, the predetermined application stores the AP information including the password input by the user in step S1410.

In step S1412, as in step S1010, the predetermined application instructs the OS to establish a connection between the communication apparatus 151, which is the paired accessory, and the terminal device 101.

In step S1413, as in step S1011, the predetermined application displays a notification screen to prevent the predetermined application from being transitioned to the background during a predetermined period. In a case where the process in the flowchart is terminated, the processing proceeds to step S1504.

In step S1504, the predetermined application transmits, to the communication apparatus 151, information for connecting to the AP identified as the AP to which the communication apparatus 151 is to connect. The transmitted information includes the SSID of the AP identified as the AP to which the communication apparatus 151 is to connect and the password for connecting to the AP identified as the AP to which the communication apparatus 151 is to connect. It should be noted that the AP identified as the AP to which the communication apparatus 151 is to connect the predetermined AP or the AP corresponding to the AP information acquired from the OS in step S1408.

In step S1505, as in step S327, the predetermined application searches for the communication apparatus 151 via the Wi-Fi network to which the terminal device 101 is connected. In a case where the communication apparatus 151 is discovered by the search, information about the communication apparatus 151 is acquired from the communication apparatus 151 via the Wi-Fi network to which the terminal device 101 is connected, and the communication apparatus 151 is registered in the predetermined application. It should be noted that at this time, the predetermined application may automatically set this registered communication apparatus 151 as the selected communication apparatus 151. Subsequently, the predetermined application terminates the process and displays the home screen of the predetermined application.

It should be noted that according to the second embodiment, the predetermined application does not receive an AP list, determine whether an AP list includes the predetermined AP, determine whether the predetermined AP and the specific AP match, or display an AP list, unlike the first embodiment. This is because password input for the AP to which the communication apparatus 151 is to connect is received and the AP to which the communication apparatus 151 is to connect is identified prior to the predetermined connection.

It should be noted that the user may be guided to another connection method in a case where the communication apparatus 151 has failed to connect to the AP identified as the AP to connect to or a case where the communication apparatus 151 is not discovered by the search although the communication apparatus 151 is connected to the predetermined AP.

The above-described configuration makes it possible to improve the usability of the predetermined application when establishing a connection between the communication apparatus 151 and the terminal device 101 during the connection setting process using AccessorySetupKit.

### Other Embodiments

While a connection between the communication apparatus 151 operating in the connection setting mode and the terminal device 101 is established using Wi-Fi according to the embodiments described above, this configuration is not intended to be limiting. A communication method other than Wi-Fi, such as Bluetooth^{®} Classic or Bluetooth^{®} Low Energy, may be used to establish a connection between the communication apparatus 151 operating in the connection setting mode and the terminal device 101. It should be noted that a communication method other than Wi-Fi may be used to establish a connection in the first connection setting process and/or the second connection setting process. In other words, a communication method other than Wi-Fi may be used to acquire accessory information from the communication apparatus 151 using AccessorySetupKit and/or to establish a connection based on the acquired accessory information. This is because AccessorySetupKit is a function configured to manage an apparatus that can communicate via Bluetooth^{®} as an accessory as described above. In this case, the terminal device 101 may maintain a Wi-Fi connection with the predetermined AP while a connection is established between the communication apparatus 151 operating in the connection setting mode and the terminal device 101.

In other words, there is a configuration in which a connection between the communication apparatus 151 operating in the connection setting mode and the terminal device 101 is established using Wi-Fi. In this case, the predetermined AP is the AP to which the terminal device 101 is connected when a process is performed to start the process illustrated in the flowchart in Figs. 3A and 3B, Figs. 11A and 11B, or Fig. 15 but is not connected when information about the predetermined AP is transmitted to the communication apparatus 151. Further, there is another configuration in which a connection between the communication apparatus 151 operating in the connection setting mode and the terminal device 101 is established using a communication method other than Wi-Fi. In this case, the predetermined AP is the AP to which the terminal device 101 is connected when a process is performed to start the process illustrated in the flowchart in Figs. 3A and 3B, Figs. 11A and 11B, or Fig. 15 and also when information about the predetermined AP is transmitted to the communication apparatus 151. Thus, the predetermined AP can be described as the AP to which the terminal device 101 is connected at least when a process is performed to start the process illustrated in the flowchart in Figs. 3A and 3B, Figs. 11A and 11B, or Fig. 15.

In the first connection setting process, the processes that reference the specific AP may not be performed. Specifically, for example, the processes of steps S301 and S308 to S312 may be skipped. In this case, step S313 is performed in a case where the result of the determination in step S305 is "NO". Further, step S319 is performed in a case where the result of the determination in step S307 is "YES".

In the first connection setting process, both the processes that reference the predetermined AP and the processes that reference the specific AP may not be performed. Specifically, for example, the processes of steps S301, S302, and S305 to S312 may be skipped. In this case, step S313 is performed following step S304.

In the first connection setting process, the direct connection button may not be displayed on the screen displayed in step S313. Specifically, for example, the processes of steps S314 to S317 may be skipped. In this case, step S318 is performed following step S313.

In the first connection setting process, the OS of the terminal device 101 may be a version that supports the display of the password on the Wi-Fi settings screen using the setting application. In this case, both the button 503 for checking the password and the button 504 for another connection method may not be displayed on the password input screen displayed in step S319. In other words, one of the button 503 for checking the password and the button 504 for another connection method may be displayed on the password input screen displayed in step S319 while the other is not displayed. In a case where the button 503 for checking the password is not displayed on the password input screen displayed in step S319, steps S321 and S322 are skipped, and step S323 is performed in a case where the result of the determination in step S320 is "NO". In a case where the button 504 for another connection method is not displayed on the password input screen displayed in step S319, steps S323 and S324 are skipped, and step S325 is performed in a case where the result of the determination in step S321 is "NO".

In the first connection setting process described above, the screen for checking the password is displayed in a case where the button 503 for checking the password displayed as a region for checking the password on the password input screen is operated. However, this method is not intended to be limiting. A region presenting a sentence describing a specific password checking method may be displayed as a region for checking the password on the password checking method. In other words, the content described on the screen for checking the password according to the above-described embodiments may be displayed on the password input screen. Further, the content may be displayed on another displayed screen before the password input screen is displayed. In this case, the button 503 for checking the password may not be displayed on the password input screen 500.

While the button 504 for another connection method is displayed as a region for another connection method on the password input screen and the screen for another connection method is displayed in a case where the button 504 is operated in the first connection setting process described above, this method is not intended to be limiting. A region presenting a sentence describing another connection method may be displayed as a region for another connection method on the password input screen. In other words, the content displayed on the screen for another connection method according to the embodiments described above may be displayed on the password input screen. Further, the content may be displayed on another displayed screen before the password input screen is displayed. In this case, the button 504 for another connection method may not be displayed on the password input screen 500.

In the first connection setting process, the order of the determinations in steps S320 to S325 is not particularly limited, and the determinations in steps S320 to S325 may be performed in any order.

While the list of APs discovered by the search performed by the communication apparatus 151 is used in the determinations in steps S305 and S309 and displayed in step S313 in the first connection setting process described above, this method is not intended to be limiting. A list of APs discovered by a search performed by the terminal device 101 may be used in the determinations in steps S305 and S309 and displayed in step S313. In this case, the process of step S304 may be skipped.

In the second connection setting processes according to the first and second embodiments, the processes that reference the specific AP may not be performed. Specifically, for example, the processes of steps S1101, S1107, and S1108 may be skipped in the first embodiment. In this case, step S1109 is performed in a case where the result of the determination in step S1106 is "NO". Further, step S1115 is performed in a case where the result of the determination in step S1106 is "YES". In the second embodiment, the processes of steps S1409 and S1501 may be skipped. In a case where the process of step S1409 is skipped, step S1410 is performed in a case where the result of the determination in step S1406 is "YES". Further, step S1410 is performed following step S1408. In a case where the process of step S1501 is skipped, step S1502 is performed after the flowchart in Fig. 15 is started.

In the second connection setting process described above, a region presenting a sentence describing a specific password checking method is displayed as a region for checking the password on the screen for checking the password according to the first embodiment or the password input screen according to the second embodiment. However, this method is not intended to be limiting. As in the first connection setting process, the screen for checking the password may be displayed as a region for checking the password in a case where the button for checking the password displayed as a region for checking the password on the screen for checking the password or the password input screen is operated. In other words, the button for checking the password may be displayed on the screen for checking the password or the password input screen in the second connection setting process.

In the second connection setting process according to the first embodiment, both the processes that reference the predetermined AP and the processes that reference the specific AP may not be performed. Specifically, for example, the processes of steps S1005 to S1008 may be skipped. In this case, step S1009 is performed in a case where the result of the determination in step S1004 is "YES". Furthermore, the processes of steps S1101, S1102, and S1105 to S1108 may be skipped. In this case, step S1109 is performed following step S1104.

In the second connection setting process according to the first embodiment, the direct connection button may not be displayed on the screen displayed in step S1109. Specifically, for example, the processes of steps S1110 to S1113 may be skipped. In this case, step S1114 is performed following step S1109.

In the second connection setting process according to the first embodiment described above, the button 1303 for another connection method is displayed as a region for another connection method on the password input screen, and in a case where the button is operated, the screen for another connection method is displayed. However, this method is not intended to be limiting. A region presenting a sentence describing another connection method may be displayed as a region for another connection method on the password input screen. In other words, the content displayed on the screen for another connection method according to the embodiments described above may be displayed on the password input screen. Further, the content may be displayed on another displayed screen before the password input screen is displayed. In this case, the button 1303 for another connection method may not be displayed on the password input screen 1300. In this case, steps S1117 and S1118 are skipped, and step S1119 is performed in a case where the result of the determination in step S1116 is "NO".

In the second connection setting process according to the first embodiment, the order of the determinations in steps S1116 to S1119 is not particularly limited, and the determinations in steps S1116 to S1119 may be performed in any order.

While the list of APs discovered by the search performed by the communication apparatus 151 is used in the determination in step S1106 and displayed in step S1109 in the second connection setting process according to the first embodiment described above, this method is not intended to be limiting. A list of APs discovered by a search performed by the terminal device 101 may be used in the determination in step S1106 and displayed in step S1109. In this case, the process of step S1104 may be skipped.

In the above-described embodiments, the process of determining whether the initial setting operation on the communication apparatus 151 is complete may not be performed. Specifically, for example, the processes of steps S702 to S706 may be skipped. In this case, step S707 is performed following step S701.

In the above-described embodiments, the predetermined application may transmit setting information to the communication apparatus without displaying the screen for checking the password for the AP, the password input screen for inputting the password for the AP, or the notification screen for preventing the predetermined application from being transitioned to the background.

It should be noted that an embodiment of the present disclosure may be configured to solve only one of the first and second issues described above. Thus, for example, in a case where a connection between the terminal device 101 and the communication apparatus 151 is established based on information acquired through the execution of AccessorySetupKit to solve the first issue, no process may be performed to solve the second issue. In other words, for example, the screen for checking the password or the password input screen may be displayed after a connection is established between the terminal device 101 and the communication apparatus 151.

Further, the connection between the terminal device 101 and the communication apparatus 151 in this case may be established using either Wi-Fi or Bluetooth^{®}.

Further, the disclosure of the present embodiments includes the following configurations.

### (Item 1)

A predetermined application program used to communicate with a communication apparatus and causing a computer of an information processing apparatus including a predetermined operating system (OS) to execute a process comprising:
issuing a predetermined instruction to search for the communication apparatus using AccessorySetupKit to the OS;
acquiring, from the OS, accessory information corresponding to the communication apparatus discovered using the AccessorySetupKit;
executing a process of establishing a predetermined connection between the information processing apparatus and the communication apparatus using the accessory information acquired from the OS; and
executing a first transmission to transmit setting information used to connect to an access point outside the information processing apparatus to the communication apparatus via the predetermined connection,
wherein in a case where the setting information is received by the communication apparatus, the communication apparatus connects to the access point using the setting information.

### (Item 2)

The program according to item 1, further causing the computer to execute a process comprising a first control to control, based on a predetermined condition, whether to execute a first connection setting process configured to transmit the setting information to the communication apparatus via another connection different from the predetermined connection or a second connection setting process configured to transmit the setting information to the communication apparatus via the predetermined connection,
wherein the other connection different from the predetermined connection is a connection configured to be controlled by a process performed by the predetermined application program to prevent the connection from being disconnected even in a case where the predetermined application program is transitioned to the background, and
wherein the predetermined connection is a connection not configured to be controlled by the process performed by the predetermined application program to prevent the connection from being disconnected even in a case where the predetermined application program is transitioned to the background.

### (Item 3)

The program according to item 2,
wherein the predetermined condition is that the OS of the information processing apparatus is a specific version or later, and
wherein in a case where the predetermined condition is satisfied, the second connection setting process is performed, and in a case where the predetermined condition is not satisfied, the first connection setting process is performed.

### (Item 4)

The program according to item 2 or 3,
wherein the predetermined condition is that a predetermined access point to which the information processing apparatus is connected at least when a predetermined operation is received on a screen displayed by the predetermined application program supports a 2.4 GHz frequency band,
wherein in a case where the predetermined condition is satisfied, the second connection setting process is performed, and in a case where the predetermined condition is not satisfied, the first connection setting process is performed, and
wherein in a case where the predetermined operation is received, the setting information is transmitted from the information processing apparatus to the communication apparatus.

### (Item 5)

The program according to any one of items 2 to 4,
wherein the other connection is a connection established without using information acquired by execution of AccessorySetupKit, and
wherein the predetermined connection is a connection established using the information acquired by execution of AccessorySetupKit.

### (Item 6)

The program according to any one of items 1 to 5, wherein in a case where the communication apparatus is discovered by the search for the communication apparatus performed based on the predetermined instruction using the AccessorySetupKit, the OS displays a screen including a full service set identifier (SSID) of the discovered communication apparatus and an image corresponding to the discovered communication apparatus.

### (Item 7)

The program according to any one of items 1 to 6, wherein in a case where the plurality of communication apparatuses corresponding to the predetermined instruction is discovered, the OS displays information corresponding to the plurality of discovered communication apparatuses on a screen including a full SSID of each discovered communication apparatus and an image corresponding to each discovered communication apparatus to allow a user to select one of the plurality of discovered communication apparatuses.

### (Item 8)

The program according to any one of items 1 to 7, further causing the computer to execute a process comprising a first display control to display a notification screen to prevent that the predetermined application program from being transitioned to the background,
wherein the predetermined connection is a connection not configured to be controlled by the process performed by the predetermined application program to prevent the connection from being disconnected even in a case where the predetermined application program is transitioned to the background.

### (Item 9)

The program according to any one of items 1 to 8, further causing the computer to execute a process comprising:
a second display control to display, at a predetermined timing after the predetermined application program is activated and before the predetermined connection is established, a predetermined screen including a first region configured to prompt a user to confirm a password used to connect to the access point; and
a third display control to display, after the predetermined connection is established, a password input screen including a second region configured to receive the password input from the user,
wherein the predetermined connection is a connection not configured to be controlled by the process performed by the predetermined application program to prevent the connection from being disconnected even in a case where the predetermined application program is transitioned to the background, and
wherein the setting information including at least the password input by the user on the password input screen is transmitted to the communication apparatus via the predetermined connection.

### (Item 10)

The program according to any one of items 1 to 9, further causing the computer to execute a process comprising a fourth display control to display, at a predetermined timing after the predetermined application program is activated and before the predetermined connection between the information processing apparatus and the communication apparatus is established, a password input screen including a third region configured to receive a password input from a user and used to connect to the access point,
wherein the predetermined connection is a connection not configured to be controlled by the process performed by the predetermined application program to prevent the connection from being disconnected even in a case where the predetermined application program is transitioned to the background, and
wherein the setting information including at least the password input by the user on the password input screen is transmitted to the communication apparatus via the predetermined connection.

### (Item 11)

The program according to any one of items 1 to 10, further causing the computer to execute a process comprising a first search to search for the communication apparatus on a network to which the information processing apparatus is connected at least at a timing when a predetermined operation is received on a screen displayed by the predetermined application program,
wherein in a case where the communication apparatus is discovered by the search, a process of searching for the communication apparatus using the AccessorySetupKit and transmitting the setting information to the communication apparatus is not performed, and
wherein in a case where the communication apparatus is not discovered by the search, the process of searching for the communication apparatus using the AccessorySetupKit and transmitting the setting information to the communication apparatus is performed.

### (Item 12)

The program according to any one of items 1 to 11, further causing the computer to execute a process comprising a second transmission to transmit at least one of a print job that causes the communication apparatus to execute printing and a scan job that causes the communication apparatus to execute scanning.

### (Item 13)

The program according to any one of items 1 to 12, wherein the predetermined connection is a connection based on a communication method based on the Institute of Electrical and Electronics Engineers (IEEE) 802.11 series of standards or Bluetooth^{®}.

### (Item 14)

A control method of an information processing apparatus including a predetermined application program used to communicate with a communication apparatus, the control method comprising:
issuing a predetermined instruction to search for the communication apparatus using AccessorySetupKit to a predetermined OS of the information processing apparatus;
acquiring, from the OS, accessory information corresponding to the communication apparatus discovered using the AccessorySetupKit;
executing a process of establishing a predetermined connection between the information processing apparatus and the communication apparatus using the accessory information acquired from the OS; and
executing a first transmission to transmit setting information used to connect to an access point outside the information processing apparatus to the communication apparatus via the predetermined connection,
wherein in a case where the setting information is received by the communication apparatus, the communication apparatus connects to the access point using the setting information.

### (Item 15)

An information processing apparatus including a predetermined application program used to communicate with a communication apparatus, the information processing apparatus comprising:
at least one memory and at least one processor and/or at least one circuit which function as:
an instruction unit configured to issue a predetermined instruction to search for the communication apparatus using AccessorySetupKit to a predetermined OS of the information processing apparatus;
an acquisition unit configured to acquire, from the OS, accessory information corresponding to the communication apparatus discovered using the AccessorySetupKit;
an execution unit configured to execute a process of establishing a predetermined connection between the information processing apparatus and the communication apparatus using the accessory information acquired from the OS; and
a first transmission unit configured to transmit setting information used to connect to an access point outside the information processing apparatus to the communication apparatus via the predetermined connection,
wherein in a case where the setting information is received by the communication apparatus, the communication apparatus connects to the access point using the setting information.

The present disclosure makes it possible to improve the usability of an application program that performs a process for transmitting information for connecting to an access point to a communication apparatus.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A predetermined application program configured to communicate with a communication apparatus, and configured to cause a computer of an information processing apparatus including a predetermined operating system, OS, to execute a process comprising:
issuing a predetermined instruction to search for the communication apparatus using AccessorySetupKit to the OS;
acquiring, from the OS, accessory information corresponding to the communication apparatus discovered using the AccessorySetupKit;
executing a process of establishing a predetermined connection between the information processing apparatus and the communication apparatus using the accessory information acquired from the OS; and
executing a first transmission to transmit setting information used to connect to an access point outside the information processing apparatus to the communication apparatus via the predetermined connection,
wherein in a case where the setting information is received by the communication apparatus, the communication apparatus connects to the access point using the setting information.

2. The program according to claim 1,
wherein the program is configured to cause the computer to execute a process comprising a first control to control, based on a predetermined condition, whether to execute a first connection setting process configured to transmit the setting information to the communication apparatus via another connection different from the predetermined connection or a second connection setting process configured to transmit the setting information to the communication apparatus via the predetermined connection,
wherein the other connection different from the predetermined connection is a connection configured to be controlled by a process performed by the predetermined application program to prevent the connection from being disconnected even in a case where the predetermined application program is transitioned to the background, and
wherein the predetermined connection is a connection not configured to be controlled by the process performed by the predetermined application program to prevent the connection from being disconnected even in a case where the predetermined application program is transitioned to the background.

3. The program according to claim 2,
wherein the predetermined condition is that the OS of the information processing apparatus is a specific version or later, and
wherein in a case where the predetermined condition is satisfied, the second connection setting process is performed, and in a case where the predetermined condition is not satisfied, the first connection setting process is performed.

4. The program according to claim 2 or 3,
wherein the predetermined condition is that a predetermined access point to which the information processing apparatus is connected at least when a predetermined operation is received on a screen displayed by the predetermined application program supports a 2.4 GHz frequency band,
wherein in a case where the predetermined condition is satisfied, the second connection setting process is performed, and in a case where the predetermined condition is not satisfied, the first connection setting process is performed, and
wherein in a case where the predetermined operation is received, the setting information is transmitted from the information processing apparatus to the communication apparatus.

5. The program according to any one of claims 2 to 4,
wherein the other connection is a connection established without using information acquired by execution of AccessorySetupKit, and
wherein the predetermined connection is a connection established using the information acquired by execution of AccessorySetupKit.

6. The program according to any one of claims 1 to 5, wherein in a case where the communication apparatus is discovered by the search for the communication apparatus performed based on the predetermined instruction using the AccessorySetupKit, the OS displays a screen including a full service set identifier, SSID, of the discovered communication apparatus and an image corresponding to the discovered communication apparatus.

7. The program according to any one of claims 1 to 6, wherein in a case where the plurality of communication apparatuses corresponding to the predetermined instruction is discovered, the OS displays information corresponding to the plurality of discovered communication apparatuses on a screen including a full SSID of each discovered communication apparatus and an image corresponding to each discovered communication apparatus to allow a user to select one of the plurality of discovered communication apparatuses.

8. The program according to any one of claims 1 to 7,
wherein the program is configured to cause the computer to execute a process comprising a first display control to display a notification screen to prevent that the predetermined application program from being transitioned to the background, and
wherein the predetermined connection is a connection not configured to be controlled by the process performed by the predetermined application program to prevent the connection from being disconnected even in a case where the predetermined application program is transitioned to the background.

9. The program according to any one of claims 1 to 8,
wherein the program is configured to cause the computer to execute a process comprising:
a second display control to display, at a predetermined timing after the predetermined application program is activated and before the predetermined connection is established, a predetermined screen including a first region configured to prompt a user to confirm a password used to connect to the access point; and
a third display control to display, after the predetermined connection is established, a password input screen including a second region configured to receive the password input from the user,
wherein the predetermined connection is a connection not configured to be controlled by the process performed by the predetermined application program to prevent the connection from being disconnected even in a case where the predetermined application program is transitioned to the background, and
wherein the setting information including at least the password input by the user on the password input screen is transmitted to the communication apparatus via the predetermined connection.

10. The program according to any one of claims 1 to 9,
wherein the program is configured to cause the computer to execute a process comprising a fourth display control to display, at a predetermined timing after the predetermined application program is activated and before the predetermined connection between the information processing apparatus and the communication apparatus is established, a password input screen including a third region configured to receive a password input from a user and used to connect to the access point,
wherein the predetermined connection is a connection not configured to be controlled by the process performed by the predetermined application program to prevent the connection from being disconnected even in a case where the predetermined application program is transitioned to the background, and
wherein the setting information including at least the password input by the user on the password input screen is transmitted to the communication apparatus via the predetermined connection.

11. The program according to any one of claims 1 to 10,
wherein the program is configured to cause the computer to execute a process comprising a first search to search for the communication apparatus on a network to which the information processing apparatus is connected at least at a timing when a predetermined operation is received on a screen displayed by the predetermined application program,
wherein in a case where the communication apparatus is discovered by the search, a process of searching for the communication apparatus using the AccessorySetupKit and transmitting the setting information to the communication apparatus is not performed, and
wherein in a case where the communication apparatus is not discovered by the search, the process of searching for the communication apparatus using the AccessorySetupKit and transmitting the setting information to the communication apparatus is performed.

12. The program according to any one of claims 1 to 11, wherein the program is configured to cause the computer to execute a process comprising a second transmission to transmit at least one of a print job that causes the communication apparatus to execute printing and a scan job that causes the communication apparatus to execute scanning.

13. The program according to any one of claims 1 to 12, wherein the predetermined connection is a connection based on a communication method based on the Institute of Electrical and Electronics Engineers, IEEE, 802.11 series of standards or Bluetooth^{®}.

14. A control method of an information processing apparatus including a predetermined application program used to communicate with a communication apparatus, the control method comprising:
issuing a predetermined instruction to search for the communication apparatus using AccessorySetupKit to a predetermined OS of the information processing apparatus;
acquiring, from the OS, accessory information corresponding to the communication apparatus discovered using the AccessorySetupKit;
executing a process of establishing a predetermined connection between the information processing apparatus and the communication apparatus using the accessory information acquired from the OS; and
executing a first transmission to transmit setting information used to connect to an access point outside the information processing apparatus to the communication apparatus via the predetermined connection,
wherein in a case where the setting information is received by the communication apparatus, the communication apparatus connects to the access point using the setting information.

15. An information processing apparatus including a predetermined application program used to communicate with a communication apparatus, the information processing apparatus comprising:
at least one memory and at least one processor and/or at least one circuit which function as:
instruction means for issuing a predetermined instruction to search for the communication apparatus using AccessorySetupKit to a predetermined OS of the information processing apparatus;
acquisition means for acquiring, from the OS, accessory information corresponding to the communication apparatus discovered using the AccessorySetupKit;
execution means for executing a process of establishing a predetermined connection between the information processing apparatus and the communication apparatus using the accessory information acquired from the OS; and
first transmission means for transmitting setting information used to connect to an access point outside the information processing apparatus to the communication apparatus via the predetermined connection,
wherein in a case where the setting information is received by the communication apparatus, the communication apparatus connects to the access point using the setting information.
